(19) Europäisches Patentamt
European Patent Office
Office européen des brevets

(11) EP 4 410 863 B1

(12) # EUROPEAN PATENT SPECIFICATION

(45) Date of publication and mention of the grant of the patent:
**05.08.2026 Bulletin 2026/32**

(21) Application number: **22886117.5**

(22) Date of filing: **28.10.2022**

(51) International Patent Classification (IPC):
***C08G 63/91*** *(2006.01)* ***C08G 63/685*** *(2006.01)*
***C08G 63/78*** *(2006.01)* ***C08G 18/42*** *(2006.01)*
***C08G 83/00*** *(2006.01)*

(52) Cooperative Patent Classification (CPC):
**C08G 63/912; C08G 18/246; C08G 18/4244; C08G 18/4277; C08G 18/4887; C08G 18/5021; C08G 63/08; C08G 63/6852; C08G 63/823; C08G 63/85; C08G 83/007; C08L 67/04;**
C08G 2280/00; C08L 2201/12; C08L 2203/02

(86) International application number:
**PCT/CN2022/128226**

(87) International publication number:
**WO 2023/072242 (04.05.2023 Gazette 2023/18)**

(54) **COMPOSITION FOR PREPARING POLYCAPROLACTONE SHAPE MEMORY MATERIAL, AND POLYCAPROLACTONE SHAPE MEMORY MATERIAL, PREPARATION METHOD THEREFOR, AND APPLICATION THEREOF**

ZUSAMMENSETZUNG ZUR HERSTELLUNG VON POLYCAPROLACTONFORMGEDÄCHTNISMATERIAL UND POLYCAPROLACTONFORMGEDÄCHTNISMATERIAL, HERSTELLUNGSVERFAHREN DAFÜR UND ANWENDUNG DAVON

COMPOSITION POUR LA PRÉPARATION D’UN MATÉRIAU À MÉMOIRE DE FORME À BASE DE POLYCAPROLACTONE ET MATÉRIAU À MÉMOIRE DE FORME À BASE DE POLYCAPROLACTONE, PROCÉDÉ DE PRÉPARATION ASSOCIÉ ET APPLICATION CORRESPONDANTE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **28.10.2021 CN 202111266177**

(43) Date of publication of application:
**07.08.2024 Bulletin 2024/32**

(73) Proprietors:
- **China Petroleum & Chemical Corporation**
  **Beijing 100728 (CN)**
- **Sinopec Nanjing Research Institute of Chemical Industry Co., Ltd.**
  **Nanjing, Jiangsu 210048 (CN)**

(72) Inventors:
- **JIA, Feng**
  **Nanjing, Jiangsu 210048 (CN)**
- **CHEN, Chen**
  **Nanjing, Jiangsu 210048 (CN)**
- **SHI, Lemeng**
  **Nanjing, Jiangsu 210048 (CN)**
- **GAO, Ruomei**
  **Nanjing, Jiangsu 210048 (CN)**
- **WU, Zhao**
  **Nanjing, Jiangsu 210048 (CN)**
- **YAO, Weizhou**
  **Nanjing, Jiangsu 210048 (CN)**

(74) Representative: **karo IP**
**Patentanwälte PartG mbB**
**Steinstraße 16-18**
**40212 Düsseldorf (DE)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

(Cont. next page)

(56) References cited:

**WO-A1-2021/162443**
**CN-A- 1 938 367**
**CN-A- 102 443 200**
**CN-A- 103 936 938**
**CN-A- 113 831 706**
**JP-A- 2020 076 010**
**US-A1- 2012 316 278**
**US-A1- 2017 233 533**
**US-A1- 2019 144 569**
**US-A1- 2021 179 786**

- **WU RUIQING ET AL: "High-strain slide-ring shape-memory polycaprolactone-based polyurethane", SOFT MATTER, vol. 14, no. 22, 1 January 2018 (2018-01-01), GB, pages 4558 - 4568, XP093231483, ISSN: 1744-683X, DOI: 10.1039/C8SM00570B**
- **MINATO KOSUKE ET AL: "Mechanical properties of supramolecular elastomers prepared from polymer-grafted polyrotaxane", POLYMER, vol. 128, 2 May 2018 (2018-05-02), pages 386 - 391, XP085214680, ISSN: 0032-3861, DOI: 10.1016/J.POLYMER.2017.02.090**

## Description

### CROSS-REFERENCE TO RELATED APPLICATIONS

The present disclosure claims the benefit of Chinese patent application "202111266177.2", filed on October 28, 2021.

### FIELD

The present disclosure relates to the field of polycaprolactone shape memory materials, in particular to a composition for preparing a polycaprolactone shape memory material, and a polycaprolactone shape memory material, a preparation method therefor, and a use thereof.

### BACKGROUND

The shape memory material is a kind of material that can be endowed a certain shape (initial state) under certain conditions, and when the external conditions change, for example, after applying certain stimuli such as heat, illumination, energization, chemical treatment, it can change its shape accordingly and fix the shape (temporary shape), and if the external environment further changes according to a specific way and pattern, the material can reversibly return to the initial state. The shape memory polymer materials (SMPs), as one of the shape memory materials, have advantages such as desirable shape change (recoverable deformation up to 1000%), low density, low cost, structural designability, and controllability of deformation recovery behavior compared with other shape memory materials (alloys, ceramics), it has widespread applications in the biomedicine, aerospace industry, automobile, and robot industry and the other field.

Generally speaking, in order to prevent the memory property degradation caused by slippage of the polymer molecular chains in the shape memory cycle, it is necessary to crosslink the polymer molecular chains to fix their permanent shape, but the mixing of the polymer network precursors, the connection of the ends, or an occurrence of the chain growth reaction will continuously carry out until the formation of the polymer network, which is a statistical process, so that most of the polymer networks have defects, thereby limiting the properties of the material. For example, uneven distribution of network nods may result in the uneven stress distribution of the material during the stress-strain cycles, and both the shape recovery performance and toughness do not meet the predetermined requirements. In addition, the cross-linked network of the conventional polymer is generally irreversible covalent bonding, once the shape memory material is formed, the permanent shape of the shape memory material cannot be altered and cannot be further processed and formed, thereby limiting the application ranges of the shape memory material in various fields. Due to excellent biodegradability and biocompatibility, the polycaprolactone shape memory material is often used as a biomedical material, but because of its uneven cross-linked network and the non-reworkability, the shape recovery rate of the material is low, and the error-tolerance rate is low when the material is used for disposable medical supplies.

Wu Ruiging ET AL discloses that supramolecular slide-ring (SR) elastomers without solvent were fabricated by cross-linking of polymergrafted polyrotaxane in which a-cyclodextrins (CDs) with poly-e-caprolactone (PCL) side chains are threaded on a polyethylene glycol (PEG) axial linear chain. The cross-links in the SR elastomers are capable of sliding along the backbone in response to applied stress. Mechanical properties of the SR elastomers with different cross-linking densities were compared with those of fixed cross-link (FC) elastomers prepared from PCL-grafted hydroxypropyl cellulose (HPC) to understand the influence of the slidable cross-links. The SR elastomers are found to undergo less strain-hardening at large strains and demonstrate higher strains at break than the conventional FC elastomers with the same Young's moduli. ("High-strain slide-ring shape-memory polycaprolactone-based polyurethane", Soft Matter, vol. 14, no. 22, 1 January 2018 (2018-01-01), pages 4558-4568).

Minato Kosuke ET AL describes novel semi-crystalline slide-ring shape-memory polycaprolactone-based polyurethane (SR-SMPCLU) with movable net-points constructed by a topologically interlocked slide-ring structure was designed and fabricated. The SR-SMPCLU not only exhibited good shape fixity, almost complete shape recovery, and a fast shape-recovery speed, it also showed an outstanding recoverable high-strain capacity with 95.83% R, under a deformation strain of 1410% due to the pulley effect of the topological slide-ring structure. Furthermore, the SR-SMPCLU system maintained excellent shape-memory performance with increasing the training cycle numbers at 45% and even 280% deformation strain. The effects of the slide-ring cross-linker content, deformation strain, and successive shape-memory cycles on the shape-memory performance were investigated ("High-strain slide-ring shape-memory polycaprolactone-based polyurethane", Polymer, Vol. 128; pages 386-391).

Therefore, it is necessary to develop an improved preparation method for the polycaprolactone shape memory material.

## SUMMARY

The present disclosure aims to overcome the defects of the polycaprolactam shape memory material in the toughness, complex shape designability, and solid remoldability in the prior art, and provides a composition for preparing a polycaprolactone shape memory material, and a polycaprolactone shape memory material, a preparation method therefor, and a use thereof.

In order to achieve the above object, the first aspect of the present disclosure provides a polycaprolactone shape memory material comprising a plurality of modified polyrotaxane macromolecular chains, and a plurality of composite macromolecular chains connected to different modified polyrotaxane macromolecular chains, wherein each of the composite macromolecular chains comprises at least two segments of polycaprolactone macromolecular chains, a reversible linking group between different polycaprolactone macromolecular chains, and a linking modification group for linking cyclodextrin-derived cyclic structures comprised in the polycaprolactone macromolecular chains and the modified polyrotaxane macromolecular chains, wherein the reversible linking group is a photo-reversible linking group.

The second aspect of the present disclosure provides a composition for preparing the polycaprolactone shape memory material of the present disclosure, wherein the composition comprises a polyrotaxane initiator, an end group modifier, $\varepsilon$-caprolactone, a catalyst, and a cross-linking agent; wherein the end group modifier is selected from nitrocinnamate compounds and/or 4-((4-methyl-2-oxo-2H-chromene-7-yl) oxy) butyric acid.

The third aspect of the present disclosure provides a method for preparing a polycaprolactone shape memory material comprising the following steps:

(1) subjecting the polyrotaxane to hydroxypropylation to obtain hydroxypropylated polyrotaxane;

(2) carrying out a ring-opening polymerization on the hydroxypropylated polyrotaxane and $\varepsilon$-caprolactone in the presence of a catalyst, to obtain a polycaprolactone grafted polyrotaxane copolymer;

(3) subjecting the polycaprolactone grafted polyrotaxane copolymer and photo-reversible groups of an end group modifier to a modification reaction to obtain a polymer network precursor, wherein the end group part of the polymer network precursor is modified into the photo-reversible group;

(4) promoting the reaction of the photo-reversible group to cross-link the polymer network precursor in the presence of a cross-linking agent and the action of heating and ultraviolet light, to prepare the polycaprolactone shape memory material.

The fourth aspect of the present disclosure provides a polycaprolactone shape memory material prepared with the method of the present disclosure.

The fifth aspect of the present disclosure provides a use of the polycaprolactone shape memory material of the present disclosure in a medical recoverable fixation material.

Due to the technical scheme, the present disclosure prepares the polycaprolactone shape memory material by modifying polyrotaxane and using the modified polyrotaxane as an initiator, and obtaining a polycaprolactone (PCL) having slidable macromolecular chains through a ring-opening polymerization, then modifying the end group moiety of the PCL into photo-reversible groups and cross-linking the groups to form a cross-linked structure. By designing the cross-linked network of the polycaprolactone shape memory material with a slidable structure, the network topology defect of a polymer is adjusted to improve the toughness of the shape memory material. The cross-linking mode is modified into a reversible bonding, the introduced dynamic covalent bond can realize the complex shape designability and solid remoldability of the shape memory material.

## BRIEF DESCRIPTION OF THE DRAWINGS

FIG. 1 illustrates a nuclear magnetic comparison diagram of polyethylene glycol diamine and $\alpha$-cyclodextrin, and the polyrotaxane prepared in Example 1; wherein FIG. 1(a) shows a structural schematic view and the $^1$H-NMR spectrogram of $\alpha$-cyclodextrin, FIG. 1(b) shows a structural schematic view and the $^1$H-NMR spectrogram of polyethylene glycol diamine, and FIG. 1(c) shows a structural schematic view and the $^1$H-NMR spectrogram of polyrotaxane prepared in Example 1;
FIG. 2 illustrates a GPC (gel permeation chromatography) comparison diagram of polyethylene glycol diamine and $\alpha$-cyclodextrin, and the polyrotaxane prepared in Example 1;
FIG. 3 is the $^1$H-NMR spectrogram of hydroxypropylated polyrotaxane prepared in Example 1;

FIG. 4 illustrates an infrared comparison diagram of polyrotaxane, hydroxypropylated polyrotaxane, and polycaprolactone grafted polyrotaxane copolymers prepared in Example 1;
FIG. 5 is the $^1$H-NMR spectrogram of the polycaprolactone grafted polyrotaxane copolymer prepared in Example 1;
FIG. 6 is a schematic diagram showing a network with a cross-linked structure of the polycaprolactone shape memory material;
FIG. 7 is a demonstration diagram showing the shape remodeling process of the polycaprolactone shape memory material provided by the present disclosure.

## DESCRIPTION

The end groups and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point value of the various ranges, and the individual point values may be combined with one another to produce one or more new numerical ranges, which should be deemed have been specifically disclosed herein.
The first aspect of the present disclosure provides a polycaprolactone shape memory material comprising a plurality of modified polyrotaxane macromolecular chains, and a plurality of composite macromolecular chains connected to different modified polyrotaxane macromolecular chains, wherein each of the composite macromolecular chains comprises at least two segments of polycaprolactone macromolecular chains, a reversible linking group between different polycaprolactone macromolecular chains, and a linking modification group for linking cyclodextrin-derived cyclic structures comprised in the polycaprolactone macromolecular chains and the modified polyrotaxane macromolecular chains, wherein the reversible linking group is a photo-reversible linking group or a thermally reversible linking group.
The structure of the polycaprolactone shape memory material provided by the present disclosure can be illustrated in FIG. 6.
In some embodiments of the present disclosure, the photo-reversible linking group is preferably derived from a compound having a photo-reversible group, more preferably, the compound is selected from nitrocinnamate compounds and/or 4-((4-methyl-2-oxo-2H-chromene-7-yl) oxy)butyric acid. The nitrocinnamate compound may be a compound represented by the following formula:

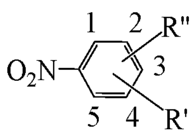
,

wherein the group R' is a substituent substituted on at least one position indicated by the numerals 1-5 of the benzene ring, and R' has a structure represented by the following formula

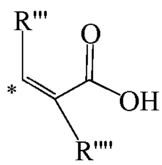
,

wherein R'''' and R''' are each independently selected from H or a linear or branched $C_1$-$C_6$ alkyl, * represents a bonding point with the benzene ring; R" is a substituent substituted on at least one position indicated by the numerals 1-5 of the benzene ring other than the position substituted by the group R', R" is H or a linear or branched $C_1$-$C_6$ alkyl, preferably, the nitrocinnamate compound is a compound represented by the following formula:

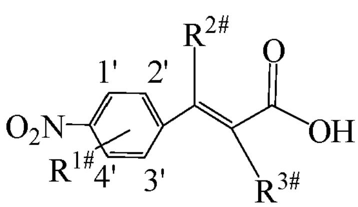
,

wherein $R^{1\#}$, $R^{2\#}$ and $R^{3\#}$ each are respectively and independently selected from H or a linear or branched $C_1$-$C_6$ alkyl, the

substitution position of $R^{1\#}$ is at least one position indicated by the numerals 1'-4' of the benzene ring, and most preferably 4-nitrocinnamate (wherein $R^{1\#}$, $R^{2\#}$ and $R^{3\#}$ are H).

Taking 4-nitrocinnamate as an example, the formed photo-reversible linking group may have the following schematic structure:

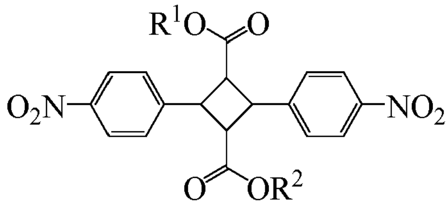

,

the process of forming the photo-reversible linking group may be illustrated as follows:

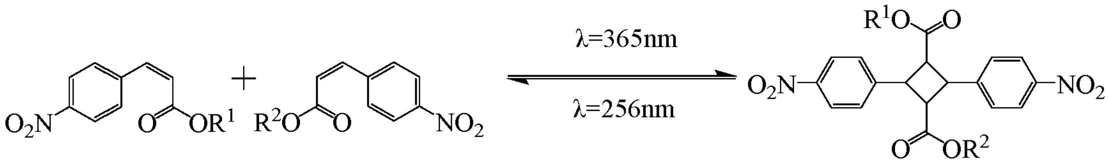


, wherein $R^1$ and $R^2$ denote the different polycaprolactone macromolecular chains attached with the different modified polyrotaxanes.

In some embodiments of the present disclosure, the thermally reversible linking group is preferably derived from diisocyanate, and the diisocyanate is preferably at least one selected from the group consisting of hexamethylene diisocyanate, toluene diisocyanate, isophorone diisocyanate, and lysine diisocyanate. The formed reversible linking group may have the following schematic structure:

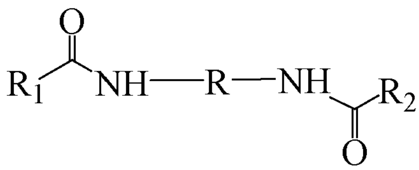

,

taking hexamethylene diisocyanate as an example, the thermally reversible process formed in the present disclosure may be illustrated as follows:

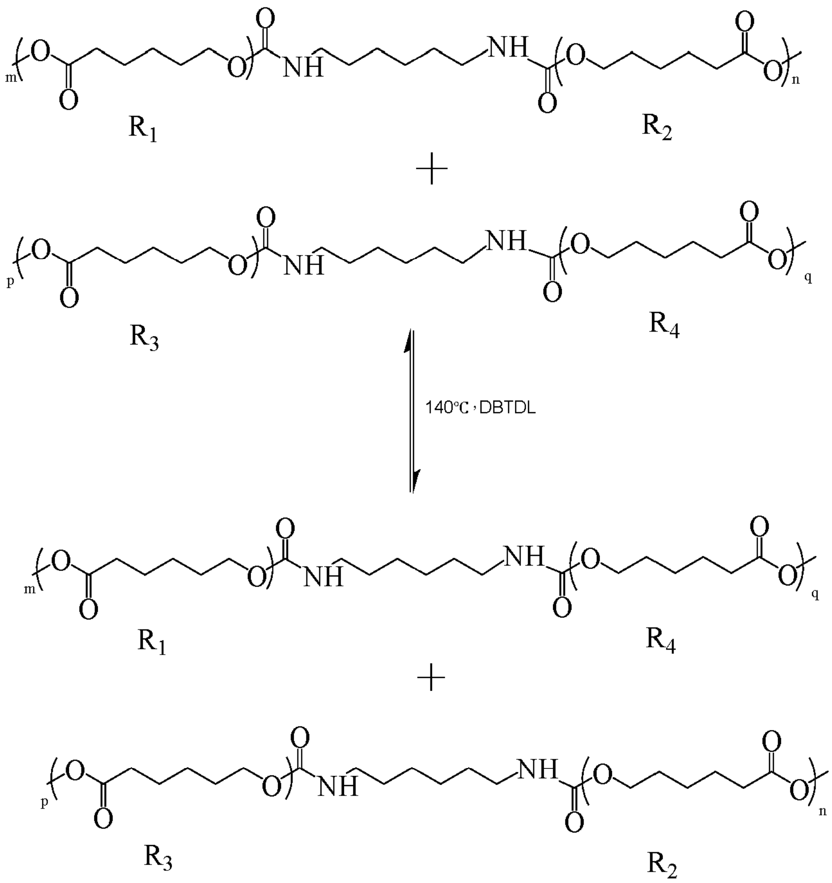


,

wherein $R_1$, $R_2$, $R_3$, and $R_4$ denote the different polycaprolactone macromolecular chains attached with different modified polyrotaxanes, and R represents the main group of diisocyanate (the structure excluding two isocyanate groups).

In some embodiments of the present disclosure, the linking modification group is preferably derived from a compound for hydroxypropylation. For example, the group may have the polypeptide macromolecular chain structure which is formed based on the modified group formed through the hydroxypropylation between the cyclodextrin-derived cyclic structures comprised in the polycaprolactone macromolecular chains and the epoxypropane, and then initiating ring-opening polymerization. The group is preferably a group represented by the structural formula $-CH_2-CH(CH_3)-O-$.

In some embodiments of the present disclosure, the total amount of the polycaprolactone molecular chains is preferably from 80wt% to 100wt%, more preferably from 95wt% to 99.9wt%, based on the total amount of the modified polyrotaxane macromolecular chains.

In some embodiments of the present disclosure, the polycaprolactone macromolecular chains preferably have a weight average molecular weight within the range from 5,000kDa to 100,0000 kDa, more preferably within the range from 10,000kDa to 80,000 kDa.

In some embodiments of the present disclosure, the modified polyrotaxane macromolecular chains preferably have a weight average molecular weight from 10kDa to 100kDa, more preferably from 30kDa to 90 kDa.

In some embodiments of the present disclosure, the polycaprolactone shape memory material has an improved toughness, a large tensile strain, and excellent recovery properties, and is capable of remodeling the morphology. Preferably, the polycaprolactone shape memory material has an elongation at break of more than 900%, the polycaprolactone shape memory material has a gel content within the range from 37wt% to 78wt%, and the time for the polycaprolactone shape memory material to recover from 100% strain to an original shape is not more than 5s.

In the present disclosure, the aforementioned structure of the polycaprolactone shape memory material can be determined through the analysis means combining Raman spectrum, gel content measurement, gel permeation chromatography (GPC), Fourier transform infrared spectrum, and $^1$H NMR, or incorporating the reaction and feeding materials in the preparation process of synthesizing the material, and the reversible change process of the reversible linking group can be determined. The physicochemical properties of the polycaprolactone shape memory material can be measured, for example, the elongation at break is measured through mechanical property testing, and the gel content is measured through a Soxhlet extraction method. Both the shape recovery velocity and the shape recovery rate are measured through a plate heating and stretching method.

In the second aspect, the present disclosure provides a composition for preparing the polycaprolactone shape memory material of the present disclosure comprising a polyrotaxane initiator, an end group modifier, ε-caprolactone, a catalyst, and a cross-linking agent; wherein the end group modifier is selected from nitrocinnamate compounds and/or 4-((4-methyl-2-oxo-2H-chromene-7-yl)oxy)butyric acid.

the present disclosure provides the composition containing polyrotaxane as an initiator to initiate ring-opening polymerization of ε-caprolactone into slidable polycaprolactone molecular chains. The end group modifier can be used for modifying the end group moiety of the polycaprolactone into photo-reversible groups and modifying the cross-linking mode into a reversible bonding, thereby overcoming the problems concerning the toughness, designability, and remoldability of the existing polycaprolactone shape memory material.

In some embodiments of the present disclosure, the polyrotaxane initiator preferably has a weight average molecular weight from 10kDa to 100kDa, more preferably from 30kDa to 90 kDa. The polyrotaxane initiator is commercially available or homemade, as long as the above requirements are satisfied.

In some embodiments of the present disclosure, the catalyst is preferably at least one selected from the group consisting of stannous octoate, lithium diisopropylamide, scandium trifluoromethane sulfonate, and phosphazene base (BEMP).

In some embodiments of the present disclosure, the crosslinking agent is preferably selected from diisocyanate, more preferably, the crosslinking agent is at least one selected from the group consisting of hexamethylene diisocyanate, toluene diisocyanate, isophorone diisocyanate, and lysine diisocyanate. The crosslinking agent can be provided for linking the different polycaprolactone macromolecular chains formed by ring-opening polymerization of ε-caprolactone.

In the present disclosure, the photo-reversible group may be a cinnamate group or a coumarin group, for example, the nitrocinnamate compound may be a compound with the previously mentioned structure, which is not repeatedly described herein, it can provide a cinnamate group; 4-((4-methyl-2-oxo-2H-chromene-7-yl) oxy)butyric acid can provide a coumarin group. The structural formula of 4-((4-methyl-2-oxo-2H-chromene-7-yl) oxy)butyric acid is shown as follows:

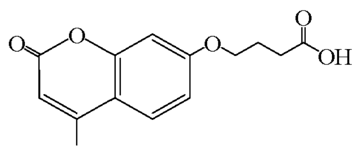

The photo-reversible group can modify one end of the polycaprolactone macromolecular chains formed by ring-opening polymerization of ε-caprolactone, and then bond the photo-reversible groups of different polycaprolactone macromolecular chains, the formed structure is capable of reversibly breaking bond or bonding under irradiation of ultraviolet having different wavelengths, such that the obtained polycaprolactone shape memory material has designability and solid remoldability.

In some embodiments of the present disclosure, the composition preferably comprises the polyrotaxane initiator within a range from 0.01wt% to 0.1wt%, ε-caprolactone within a range from 99wt%-99.99wt%, the catalyst within a range from 0.5wt% to 2wt%, the end group modifier within a range from 0.02wt% to 0.05wt%, and the crosslinking agent within a range from 0.1wt% to 1wt%, based on the total weight of the composition.

In a third aspect, the present disclosure provides a method for preparing a polycaprolactone shape memory material comprising the following steps:

(1) subjecting the polyrotaxane to hydroxypropylation to obtain hydroxypropylated polyrotaxane;

(2) carrying out a ring-opening polymerization on the hydroxypropylated polyrotaxane and ε-caprolactone in the presence of a catalyst, to obtain a polycaprolactone grafted polyrotaxane copolymer;

(3) subjecting the polycaprolactone grafted polyrotaxane copolymer and photo-reversible groups of an end group modifier to a modification reaction to obtain a polymer network precursor, wherein the end group part of the polymer network precursor is modified into the photo-reversible group;

(4) promoting the reaction of the photo-reversible group to cross-link the polymer network precursor in the presence of a cross-linking agent and the action of heating and ultraviolet light, to prepare the polycaprolactone shape memory material.

In some embodiments of the present disclosure, preferably, the hydroxypropylation process in step (1) comprises: dissolving the polyrotaxane in an alkali solution, reacting with a hydroxylation reagent, and purifying and

washing the obtained product. The hydroxylation reagent may be epoxy propane.

In some embodiments of the present disclosure, preferably, the catalyst in step (2) is at least one selected from the group consisting of stannous octoate, lithium diisopropylamide, scandium trifluoromethanesulfonate, and phosphazene base.

In some embodiments of the present disclosure, the used amount of the catalyst is preferably from 0.5wt% to 2wt%, more preferably from 0.8wt% to 1.2wt%, based on the total mass of the hydroxypropylated polyrotaxane and ε-caprolactone.

In some embodiments of the present disclosure, the mole ratio of the hydroxypropylated polyrotaxane in terms of the number of active hydroxyls contained therein to ε-caprolactone is preferably 1: (50-600), more preferably 1: (50-200). The number of active hydroxyls is determined by the ratio of the integrated area at a chemical shift of 1.1ppm on the nuclear magnetic hydrogen spectrum to the integrated area of cyclodextrin.

In some embodiments of the present disclosure, the ring-opening polymerization temperature is preferably within the range from 100°C to 140°C, more preferably within the range from 110°C to 130°C, and the ring-opening polymerization time is preferably within the range of 40-50h, more preferably within the range from 45h to 50 h.

In some embodiments of the present disclosure, preferably, the process of ring-opening polymerization comprises: subjecting the mixture of hydroxypropylated polyrotaxane, ε-caprolactone and the catalyst to a polymerization reaction under the protection of nitrogen gas; dissolving the obtained primary product with tetrahydrofuran, then carrying out precipitation in n-hexane for many times, subsequently drying the obtained solid-phase precipitate to prepare the polycaprolactone grafted polyrotaxane copolymer.

In some embodiments of the present disclosure, preferably, the molar ratio of the end group modifier to the polycaprolactone grafted polyrotaxane copolymer in step (3) is (100-400): 1.

In some embodiments of the present disclosure, preferably, the end group modifier is selected from compounds having a photo-reversible group, more preferably selected from nitrocinnamate compounds and/or 4-((4-methyl-2-oxo-2H-chromene-7-yl)oxy)butyric acid. The specific compounds are as previously described.

In some embodiments of the present disclosure, it is preferable that the temperature of the end group modification reaction is within the range from 40°C to 60°C, and the time of the end group modification reaction is within the range from 15h to 25h.

In some embodiments of the present disclosure, the process of the end group modification reaction preferably comprises: mixing the end group modifier and the polycaprolactone grafted polyrotaxane copolymer respectively with a solution prepared with a first organic solvent, adding a water absorbent-I and an esterification catalyst into the obtained mixed solution, and then carrying out the end group modification reaction; subjecting the obtained initial product to precipitation for many times, and drying the obtained solid precipitate to obtain the polymer network precursor.

In some embodiments of the present disclosure, preferably, the first organic solvent is at least one selected from the group consisting of tetrahydrofuran, N,N-dimethylformamide, dichloromethane, and dioxane; the water absorbent-I is at least one selected from N,N-diisopropyl carbodiimide, dicyclohexyl carbodiimide, and concentrated sulfuric acid; the esterification catalyst is at least one selected from the group consisting of 4-dimethylamino pyridine, p-toluene sulfonic acid, and thionyl chloride.

In some embodiments of the present disclosure, the first organic solvent is used in an amount such that the concentration of the mixed solution is preferably within the range from 1g/mL to 10g/mL, more preferably within the range from 2g/mL to 8 g/mL. That is, the total content of the end group modifier and the polycaprolactone grafted polyrotaxane copolymer contained in the mixed solution.

In some embodiments of the present disclosure, the used amount of the water absorbent-I is preferably from 1wt% to 5wt%, more preferably from 1.5wt% to 4.5wt% of the total amount of the end group modifier and the polycaprolactone grafted polyrotaxane copolymer.

In some embodiments of the present disclosure, the molar ratio of the esterification catalyst to the polycaprolactone grafted polyrotaxane copolymer is preferably 1: (1.5-3.5), more preferably 1: (2-3).

In some embodiments of the present disclosure, the photo-reversible group is derived from an end group modifier, it may be a cinnamate group or a coumarin group. Preferably, the polymer network precursor has a plurality of slidable polycaprolactone molecular chains, and a part of the chain ends of the polycaprolactone molecular chains contain a photo-reversible group derived from the end group modifier. For example, a part of the chain ends of the polycaprolactone molecular chain contains a hydroxyl group and a cinnamate group.

In some embodiments of the present disclosure, the crosslinking agent in step (4) is preferably selected from diisocyanates, more preferably at least one selected from the group consisting of hexamethylene diisocyanate, toluene diisocyanate, isophorone diisocyanate, and lysine diisocyanate. The modification reaction in step (3) may be incomplete, and not all the end groups of the polycaprolactone macromolecular chains in the polycaprolactone grafted polyrotaxane copolymer are modified into the photo-reversible groups, that is, the polymer network precursor may also contain the unmodified hydroxyl end groups of the polycaprolactone macromolecular chains so that the different polycaprolactone macromolecular chains can be thermally reversibly linked by the diisocyanate provided by the cross-linking agent.

Meanwhile, the reconnection can be performed through the ester exchange, which is equivalent to the exchange connection of different polycaprolactone macromolecular chains by the same polycaprolactone macromolecular chains.

In some embodiments of the present disclosure, the used amount of the crosslinking agent is preferably from 0.1wt% to 1wt% of the polymer network precursor.

In some embodiments of the present disclosure, preferably, the heating temperature is within the range from 70°C to 90°C, and the heating time is within the range from 45h to 60h.

In some embodiments of the present disclosure, the wavelength of the ultraviolet light is preferably within the range from 250nm to 380nm.

In some embodiments of the present disclosure, the crosslinking process preferably comprises: dissolving the polymer network precursor in a second organic solvent, and then adding a butyl acetate solution of the crosslinking agent and the crosslinking catalyst to obtain a liquid mixture; heating and drying the liquid mixture, then irradiating under the ultraviolet light to obtain the polycaprolactone shape memory material.

In some embodiments of the present disclosure, preferably, the second organic solvent is at least one selected from the group consisting of tetrahydrofuran, N,N-dimethylformamide, dichloromethane, and dioxane; the crosslinking catalyst is at least one selected from the group consisting of dibutyltin dilaurate, an organic bismuth catalyst, and N,N-dimethyl cyclohexylamine.

In some embodiments of the present disclosure, preferably, the second organic solvent is used in an amount such that the concentration of the liquid mixture is within the range from 1g/mL to 10g/mL, more preferably within the range from 2g/mL to 8 g/mL. That is, the total content of the polymer network precursor, the crosslinking agent, and the crosslinking catalyst in the liquid mixture. The used amount of the crosslinking catalyst is from 1wt% to 5wt%, preferably from 2wt% to 4wt% of the polymer network precursor.

In some embodiments of the present disclosure, the polyrotaxane can be homemade. Preferably, the polyrotaxane is prepared with the following process: reacting α-cyclodextrin with polyethylene glycol diamine in the presence of a large steric hindrance compound.

In some embodiments of the present disclosure, the large steric hindrance compound is preferably at least one selected from the group consisting of N-benzyloxycarbonyl-L-tyrosine, 1-adamantane acetic acid, fluorescein isothiocyanate, and L-phenylalanine.

In some embodiments of the present disclosure, the polyethylene glycol diamine preferably has a weight average molecular weight from 5kDa to 40kDa, more preferably from 10kDa to 35 kDa.

In some embodiments of the present disclosure, the molar ratio of α-cyclodextrin to the polyethylene glycol diamine is preferably (50-100): 1, more preferably (80-90): 1.

In some embodiments of the present disclosure, the molar ratio of the large steric hindrance compound to the polyethylene glycol diamine is preferably (2-10): 1, more preferably (5-8): 1.

In some embodiments of the present disclosure, preferably, the reaction process comprises the following steps:

(i) adding the polyethylene glycol diamine into a saturated aqueous solution of α-cyclodextrin, stirring at the temperature from 20°C to 35°C for a time from 20h to 40h, and drying the obtained white precipitate to obtain a clathrate compound;

(ii) dissolving the large steric hindrance compound, the amidation catalyst, and the water absorbent-II in a third organic solvent to prepare a solution, then adding the clathrate compound into the solution, subjecting the obtained suspension to an amidation reaction and then performing precipitation, and washing and drying the obtained solid-phase precipitate to prepare the polyrotaxane.

In some embodiments of the present disclosure, preferably, the amidation catalyst is at least one selected from the group consisting of BOP reagent, zinc chloride, and ferric chloride hexahydrate; the water absorbent-II is at least one selected from the group consisting of N,N-diisopropylethylamine, 1-hydroxybenzotriazole, and dicyclohexylcarbodiimide; the third organic solvent is at least one selected from the group consisting of N,N-dimethylformamide, tetrahydrofuran, and dichloromethane.

In some embodiments of the present disclosure, preferably, the used amount of the amidation catalyst is from 1wt% to 5wt%, more preferably from 2wt% to 4wt% of the total amount of the polyethylene glycol diamine and α-cyclodextrin; the used amount of the water absorbent agent-II is from 1wt% to 5wt%, more preferably from 2wt% to 4wt% of the total amount of the polyethylene glycol diamine and the α-cyclodextrin; the third organic solvent is used in an amount such that the concentration of the solution is within the range from 1g/mL to 10g/mL, more preferably within the range from 2g/mL to 8 g/mL. That is, the total content of the large steric hindrance compound, the amidation catalyst, and the water-absorbing agent-II in the solution.

In some embodiments of the present disclosure, the polyrotaxane preferably has a weight average molecular weight within the range from 10kDa to 100kDa, more preferably within the range from 30kDa to 90 kDa.

In a fourth aspect, the present disclosure provides a polycaprolactone shape memory material prepared with the

method of the present disclosure.

In some embodiments of the present disclosure, preferably, the polycaprolactone shape memory material is provided with polycaprolactone molecular chains capable of slipping on the polyethylene glycol molecular chains, and can return to more than 95% of an original shape within 5s; the material has a cross-linked structure, and has a photo-reversible dynamic covalent bond at a node moiety of the cross-linked structure, and the covalent bond can be broken under the irradiation of ultraviolet light with the wavelength of 256nm so that the material has the capability of remolding the original shape in a solid state. The process demonstration of the shape remodeling of the polycaprolactone shape memory material is shown in FIG. 7. The polycaprolactone shape memory material has an elongation at break more than 900%, the polycaprolactone shape memory material has a gel content within the range from 37wt% to 78wt%, and the time for the polycaprolactone shape memory material to recover from 100% strain to an original shape is not more than 5s.

In a fifth aspect, the present disclosure provides a use of the polycaprolactone shape memory material of the present disclosure in a medical recoverable fixation material.

Preferably, the use may include a shape memory medical fixation clamp.

The present disclosure will be described in detail below with reference to examples. In the following examples, $^1$H-NMR spectrograms were measured with Bruker ARX-500 manufactured by the Bruker Corporation in Switzerland, wherein the resolution was lower than 0.2 Hz and the sensitivity was larger than 100. The nuclear magnetic resonance hydrogen spectrum analysis was performed, deuterated chloroform or deuterated dimethyl sulfoxide was used as a solvent, the working frequency was 500 MHz and the magnetic field intensity was 7.05T, and the testing was performed at the normal temperature.

The GPC spectrograms were obtained by using a triple detection size-exclusion chromatograph (TD-SEC) manufactured by the Waters corporation in the United States of America (USA), both the molecular weight and polymer dispersity index (PDI) of the polymer were characterized at 35°C, polystyrene was a standard sample, THF was a mobile phase, and the tested flow rate was 1.0 mL/min;

The Fourier transform infrared spectrogram was measured with Avatar 370 manufactured by the Nicolet Corporation in the USA, the KBr tablet was adopted for sample preparation, the transmission mode was adopted, and the scanned area was 500-4,000cm$^{-1}$, the resolution was 2cm$^{-1}$.

The gel content was measured by the Soxhlet extraction method and was obtained by weighing the sample before and after extraction with chloroform for 24 h.

Both the shape recovery velocity and the shape recovery rate were measured through a plate heating and stretching method, the parameters were measured by using a Q800 universal tester manufactured by the TA Instruments Corporation in the USA.

The produced PCL samples were prepared into dumbbell-shaped bars using a standard 4×25 cutter knife, mechanical property tests were performed using an electronic universal tester at a tensile rate of 20 mm/min and a preload of 0.5N, the elongation at break and the tensile strength of each sample were then calculated based on the following formulas. Before the test, the sample strip with 2cm was from the middle of the sample strip and marked by a marker pen, the thickness of the film was measured three times at equal intervals at the marked part by using a standard vernier caliper, then the average value of the thickness was calculated, and the average thickness of the sample was recorded.

$$\text{Elongation at break} = \frac{L_1 - L_0}{L_0}$$

$$\text{Tensile strength} = \frac{F_{max}}{A}$$

Wherein $L_1$ denoted the length of the sample at the break, $L_0$ was the initial length of the sample, $F_{max}$ denoted the maximum tensile force during the stretching process, and A denoted the initial cross-sectional area of the sample.

Example 1

The method of preparing the polycaprolactone re-mouldable shape memory material comprised the following steps:

Step 1: 5.3×10$^{-5}$ mol of the polyethylene glycol diamine with a weight average molecular weight of 10 kDa was weighed, and added to a saturated aqueous solution of α-cyclodextrin (7.25g/50mL, double distilled $H_2O$). The mixture was stirred at room temperature for 24h to obtain a white precipitate, which was then lyophilized in a lyophilizer for 48h to obtain a clathrate.

2.6×10$^{-3}$ mol of N-benzyloxycarbonyl-L-tyrosine (Z-L-Tyr), BOP reagent, 1-hydroxybenzotriazole (HOBt) and N,N-Diisopropylethylamine (DIEA) were dissolved in a small amount of N,N-Dimethylformamide (DMF) in sequence, the

clathrate was added to the solution, the suspension was subjected to the amidation reaction at 25°C for 24h, the suspension was put in excessive ether to precipitate the initial product, and the precipitate was collected by centrifugation at 1,800 rpm for 20 min at room temperature, the precipitate was then continuously washed with a large amount of acetone, methanol, and water respectively and stirred for three times, the precipitate was lyophilized to obtain a polyrotaxane (PR).

An appropriate amount of polyrotaxane was weighed and dissolved in 50mL of NaOH solution with a concentration of 1mol/L, an appropriate amount of epoxy propane was dropwise added under the ice bath conditions, and the mixture was stirred overnight. The reaction temperature was gradually raised to room temperature as the ice in the solution melted. The samples were dialyzed and purified with deionized water for one week and then lyophilized. The lyophilized sample was poured into 100 mL of dichloromethane and stirred overnight to filter out free polyethylene glycol decomposed and generated during the hydroxypropylation process, subsequently washed with a large amount of acetone, and the precipitate was centrifugated and collected then dried under vacuum at 60°C to obtain hydroxypropylated polyrotaxane (HP-PR).

Step 2: the HP-PR and purified ε-caprolactone (ε-CL) in a molar ratio (number of active hydroxyl on HP-PR: ε-CL =1: 200) were fed into a dry and silanized round-bottomed flask, 1wt.% of stannous octoate was added in terms of the total mass (i.e., the total weight of HP-PR and ε-caprolactone, similarly hereinafter), the high-purity nitrogen gas was introduced for replacing the air in said round-bottomed flask, the mixture was reacted at 120°C for 48 h. The initial product was then dissolved with a small amount of tetrahydrofuran, precipitated in an excessive amount of n-hexane three times, and the precipitate was vacuum-dried at 60°C for 48 h to obtain a polycaprolactone grafted polyrotaxane copolymer (PCL-g-PR).

Step 3: 0.5 molar equivalent of 4-nitrocinnamate of the number of active hydroxyl groups of HP-PR was weighed, and dissolved in 25 mL of DMF at 50°C, the DMF solution of PCL-g-PR was added to the DMF solution of 4-nitrocinnamic acid and stirred for 30 min. 1 molar equivalent of N,N-diisopropyl carbodiimide and 0.5 molar equivalent of 4-dimethylaminopyridine were subsequently added, the mixture was reacted at 50°C for 20h. The primary product was precipitated in excessive diethyl ether, and centrifuged to collect a solid, the solid product was dissolved in a small amount of toluene, then precipitated in diethyl ether three times, the precipitate was subjected to vacuum drying at 60°C overnight to obtain a polymer network precursor, wherein the end groups were partially modified into the cinnamate groups.

Step 4: the polymer network precursor was dissolved in N,N-dimethylformamide at 80°C, a proper amount of n-butyl acetate solution of hexamethylene diisocyanate and dibutyltin dilaurate was added, and stirred for 5 min. The liquid mixture was rapidly disposed between two glass plates separated by a silicone rubber spacer, and placed in an oven at 80°C for 48 h, subsequently dried under vacuum at 80°C overnight, and finally irradiated in an ultraviolet oven under 4 UV lamps with a wavelength of 365nm and a power of 5W for 12h, so that the polycaprolactone shape memory material was prepared.

FIG. 1 illustrated a comparison diagram of the $^1$H-NMR spectrogram of the prepared PR with PEG (polyethylene glycol) and α-CD: as shown in FIG. 1(a), the peak at a chemical shift of 3.28 ppm was the proton peak on the carbon atom labeled 2; the peaks at chemical shifts of 3.5-3.7 ppm corresponded to proton peaks on the carbons atoms labeled 4, 5, and 6; the peak at a chemical shift of 3.76 ppm corresponded to the proton peak on the carbon atom labeled 3; the peak at a chemical shift of 4.51 ppm was the proton peak of the hydroxyl on carbon atom labeled 6; the peak at a chemical shift of 4.80 ppm was the proton peak on the carbon atom labeled 1; the peak at a chemical shift of 5.45 ppm was the proton peak of the hydroxyl on carbon atom labeled 3; the peak at chemical shift 5.54 ppm was the proton peak of the hydroxyl group on carbon atom labeled 2. As shown in FIG. 1(b), the peak (marked j) at the chemical shift of 2.04 ppm was a proton peak at the amine groups at both ends of PEG-$NH_2$; the peak at a chemical shift of 3.58 ppm (marked i) was the proton peak on the methylene group of PEG-$NH_2$. As shown in FIG. 1(c), the peak at a chemical shift of 3.51ppm was the proton peak of the methylene group on PEG; the peaks at chemical shifts of 4.4-5.7ppm were proton peaks on α-CD. As illustrated by the nuclear magnetic map, the synthesized PR nuclear magnetic map had a characteristic peak at 3.5 ppm of methylene of PEG and a characteristic peak at 4.8 ppm on the carbon atom labeled 1 on α-CD, indicating that the PR molecule contained PEG and α-CD structural units. When the characteristic peaks at 4.8 ppm and 3.5 ppm were subjected to integration respectively, it was found that ∫4.8: ∫3.5 = 1: 4, there was one α-CD molecule on about six PEG structural units on average.

FIG. 2 illustrated a GPC comparison diagram of the prepared PR with PEG-$NH_2$ and α-CD, as shown by the respective retention times, PR had a significantly greater molecular weight than PEG-$NH_2$ and did not contain small molecule component; with reference to the nuclear magnetic data shown in FIG. 1, it indicated that the α-CD found in the nuclear magnetic map was successfully put on the PEG molecular chain and PR was successfully synthesized.

FIG. 3 illustrated the HP-PR nuclear magnetism spectrogram of the prepared hydroxypropyl after modification, its positions were almost the same as those of PR above 2.0 ppm as shown in the nuclear magnetism spectrogram, but there was an additional proton peak of methyl at the chemical shift of 1.0 ppm (marked k) of the HP-PR, it indicated that the α-CD on PR was successfully modified by the hydroxypropyl. The peaks at 4.2-6.0 ppm and 1.0 ppm were integrated, and the hydroxypropyl modification rate DS of PR was calculated as 6 based on the area integration ratio of the peaks at 4.2-6.0 ppm relative to the peak at 1.0 ppm.

FIG. 4 illustrated an infrared comparison diagram of the prepared PR, HP-PR, and PCL-g-PR, wherein the absorption peak at 3436 $cm^{-1}$ and the absorption peaks at 3400 $cm^{-1}$ of the PR and HP-PR were attributed to the stretching

vibration of -O-H on the group -OH and -N-H on the group-NH-; the absorption peak at 2946 $cm^{-1}$ of PCL-g-PR and the absorption peak at 2923 $cm^{-1}$ of the PR and HP-PR were attributed to the asymmetric stretching vibration of -C-H on the group $-CH_2-$, while the absorption peak at 2866 $cm^{-1}$ of PCL-g-PR was attributed to the symmetric stretching vibration of -C-H on the group $-CH_2-$; the absorption peak at 1725 $cm^{-1}$ of PCL-g-PR was attributed to stretching vibration of carbonyl group (C=O) on a side chain of polycaprolactone, while the absorption peak at 1640 $cm^{-1}$ of the PR and HP-PR was attributed to stretching vibration of carbonyl group (C=O) on an amide bond; the absorption peaks at 1300-1500 $cm^{-1}$ of the PR, HP-PR, and PCL-g-PR were attributed to C-H in-plane bending vibration, the absorption peaks at 1000-1300 $cm^{-1}$ were caused by the C-C skeleton vibration, and the absorption peak at 650-1000 $cm^{-1}$ was attributed to C-H out-of-plane bending vibration. The carbonyl peaks found in the PR and HP-PR were attributed to amide bonds, while the carbonyl peaks found in the PCL-g-PR had a higher frequency and were corresponding to the ester bonds, which indicated that ring-opening polymerization of $\varepsilon$-caprolactone was successfully initiated by using HP-PR as an initiator so that the macromolecular ester bonds were formed. The infrared characteristic peaks of the PR and the HP-PR were almost the same, but the characteristic peak of HP-PR had a higher intensity, probably because after the $\alpha$-cyclodextrin on PR was hydroxypropylated, the hydrogen bonds between the $\alpha$-cyclodextrin were weakened, thus the vibration frequency among atoms was larger.

FIG. 5 illustrated a nuclear magnetic spectrogram of the prepared PCL-g-PR, the peak at a chemical shift of 1.32 ppm (marked d) corresponded to the proton peak on a methylene at the middlemost of the caprolactone chain segment; the peak at a chemical shift of 1.58 ppm (marked c) corresponded to the proton peak on a methylene adjacent to the middle carbon atom in the caprolactone segment; the peak at a chemical shift of 2.24 ppm (marked b) corresponded to the proton peak at the ortho carbon in the carbonyl of the caprolactone segment; the peak at a chemical shift of 3.99 ppm (marked a) corresponded to the proton peak at the ortho carbon relative to an oxygen atom of the caprolactone segment; a suspected weak characteristic peak of the PEG methylene existed at the chemical shift of 3.58 ppm, the reason may be that the methylene proton peak signals on the PEG chain were shielded due to the growth of a PCL chain segment of a PCL-g-PR side chain.

FIG. 6 illustrated a schematic view showing the cross-linked network structure of the material, which was exemplified by the polycaprolactone shape memory material prepared in Example 1. The polyethylene glycol macromolecular chains were provided with large steric hindrance groups (derived from N-benzyloxycarbonyl-L-tyrosine) shown as round dots and passed through $\alpha$-cyclodextrin shown as circular rings carried on the polycaprolactone macromolecular chains to form a cross-linked network structure of the polyethylene glycol macromolecular chains and the polycaprolactone macromolecular chains, and the polycaprolactone macromolecular chains were capable of sliding on the polyethylene glycol macromolecular chains via the loop structure provided by the $\alpha$-cyclodextrin. There was also reversible linking groups, which provided the reversible covalent bond and were schematically shown as a square block, on the polycaprolactone macromolecular chains, the reversible linking groups were formed by the photo-reversible groups provided by the end group modifier or the thermally-reversible group provided by the cross-linker, and were capable of introducing dynamic covalent bond for the polycaprolactone shape memory material, and realizing reversible bond, thereby achieving the complex shape designability and solid remoldability of the shape memory material.

Example 2

The method of preparing the polycaprolactone re-mouldable shape memory material comprised the following steps:

Step 1: $6.4\times10^{-5}$ mol of the polyethylene glycol diamine with a weight average molecular weight of 15 kDa was weighed, and added to a saturated aqueous solution of $\alpha$-cyclodextrin (7.25g/50mL, double distilled $H_2O$). The mixture was stirred at 30°C for 30h to obtain a white precipitate, which was then lyophilized in a lyophilizer for 48h to obtain a clathrate.

$3.4\times10^{-3}$ mol of N-benzyloxycarbonyl-L-tyrosine (Z-L-Tyr), BOP reagent, 1-hydroxybenzotriazole (HOBt) and N,N-Diisopropylethylamine (DIEA) were dissolved in a small amount of N,N-Dimethylformamide (DMF) in sequence, the clathrate was added to the solution, the suspension was subjected to the amidation reaction at 25°C for 26h, the suspension was put in excessive ether to precipitate the initial product, and the precipitate was collected by centrifugation at 1,800 rpm for 25 min at room temperature, the precipitate was then continuously washed with a large amount of acetone, methanol, and water respectively and stirred for three times, the precipitate was lyophilized to obtain a polyrotaxane (PR).

An appropriate amount of polyrotaxane was weighed and dissolved in 50mL of NaOH solution with a concentration of 1mol/L, an appropriate amount of epoxy propane was dropwise added under the ice bath conditions, and the mixture was stirred overnight. The reaction temperature was gradually raised to room temperature as the ice in the solution melted. The samples were dialyzed and purified with deionized water for one week and then lyophilized. The lyophilized sample was poured into 100 mL of dichloromethane and stirred overnight to filter out free polyethylene glycol decomposed and generated during the hydroxypropylation process, subsequently washed with a large amount of acetone, and the precipitate was centrifugated and collected then dried under vacuum at 55°C to obtain hydroxypropylated polyrotaxane (HP-PR).

Step 2: the HP-PR and purified ε-caprolactone (ε-CL) in a molar ratio (number of active hydroxyl on HP-PR: ε-CL =1: 100) were fed into a dry and silanized round-bottomed flask, 1wt.% of stannous octoate was added in terms of the total mass (i.e., the total weight of HP-PR and ε-caprolactone, similarly hereinafter), the high-purity nitrogen gas was introduced for replacing the air in said round-bottomed flask, the mixture was reacted at 130°C for 50 h. The initial product was then dissolved with a small amount of tetrahydrofuran, precipitated in an excessive amount of n-hexane three times, and the precipitate was vacuum-dried at 60°C for 48 h to obtain a polycaprolactone grafted polyrotaxane copolymer (PCL-g-PR).

Step 3: 0.5 molar equivalent of 4-nitrocinnamate of the number of active hydroxyl groups of HP-PR was weighed, and dissolved in 25 mL of DMF at 50°C, the DMF solution of PCL-g-PR was added to the DMF solution of 4-nitrocinnamic acid and stirred for 40 min. 1 molar equivalent of N,N-diisopropyl carbodiimide, and 0.5 molar equivalent of 4-dimethylaminopyridine were subsequently added, and the mixture was reacted at 55°C for 22h. The primary product was precipitated in excessive diethyl ether, and centrifuged to collect a solid, the solid product was dissolved in a small amount of toluene, then precipitated in diethyl ether three times, the precipitate was subjected to vacuum drying at 60°C overnight to obtain a polymer network precursor, wherein the end groups were partially modified into the cinnamate groups.

Step 4: the polymer network precursor was dissolved in N,N-dimethylformamide at 80°C, a proper amount of n-butyl acetate solution of hexamethylene diisocyanate and dibutyltin dilaurate was added, and stirred for 5 min. The liquid mixture was rapidly disposed between two glass plates separated by a silicone rubber spacer, and placed in an oven at 80°C for 48 h, subsequently dried under vacuum at 80°C overnight, and finally irradiated in an ultraviolet oven under 4 UV lamps with a wavelength of 370nm and a power of 5W for 12h, so that the polycaprolactone shape memory material was prepared.

Example 3

The method of preparing the polycaprolactone re-mouldable shape memory material comprised the following steps:

Step 1: $8.0\times10^{-5}$ mol of the polyethylene glycol diamine with a weight average molecular weight of 20 kDa was weighed, and added to a saturated aqueous solution of α-cyclodextrin (7.25g/50mL, double distilled $H_2O$). The mixture was stirred at room temperature for 24h to obtain a white precipitate, which was then lyophilized in a lyophilizer for 48h to obtain a clathrate.

$4.2\times10^{-3}$ mol of N-benzyloxycarbonyl-L-tyrosine (Z-L-Tyr), BOP reagent, 1-hydroxybenzotriazole (HOBt) and N,N-Diisopropylethylamine (DIEA) were dissolved in a small amount of N,N-Dimethylformamide (DMF) in sequence, the clathrate was added to the solution, the suspension was subjected to the amidation reaction at 30°C for 25h, the suspension was put in excessive ether to precipitate the initial product, and the precipitate was collected by centrifugation at 2,200 rpm for 15 min at room temperature, the precipitate was then continuously washed with a large amount of acetone, methanol, and water respectively and stirred for three times, the precipitate was lyophilized to obtain a polyrotaxane (PR).

An appropriate amount of polyrotaxane was weighed and dissolved in 50mL of NaOH solution with a concentration of 1mol/L, an appropriate amount of epoxy propane was dropwise added under the ice bath conditions, and the mixture was stirred overnight. The reaction temperature was gradually raised to room temperature as the ice in the solution melted. The samples were dialyzed and purified with deionized water for one week and then lyophilized. The lyophilized sample was poured into 100 mL of dichloromethane and stirred overnight to filter out free polyethylene glycol decomposed and generated during the hydroxypropylation process, subsequently washed with a large amount of acetone, and the precipitate was centrifugated and collected then dried under vacuum at 60°C to obtain hydroxypropylated polyrotaxane (HP-PR).

Step 2: the HP-PR and purified ε-caprolactone (ε-CL) in a molar ratio (number of active hydroxyl on HP-PR: ε-CL =1: 600) were fed into a dry and silanized round-bottomed flask, 1wt.% of stannous octoate was added in terms of the total mass (i.e., the total weight of HP-PR and ε-caprolactone, similarly hereinafter), the high-purity nitrogen gas was introduced for replacing the air in said round-bottomed flask, the mixture was reacted at 130°C for 55 h. The initial product was then dissolved with a small amount of tetrahydrofuran, precipitated in an excessive amount of n-hexane three times, and the precipitate was vacuum-dried at 60°C for 48 h to obtain a polycaprolactone grafted polyrotaxane copolymer (PCL-g-PR).

Step 3: 0.5 molar equivalent of 4-nitrocinnamate of the number of active hydroxyl groups of HP-PR was weighed, and dissolved in 25 mL of DMF at 50°C, the DMF solution of PCL-g-PR was added to the DMF solution of 4-nitrocinnamic acid and stirred for 30 min. 1 molar equivalent of N,N-diisopropyl carbodiimide and 0.5 molar equivalent of 4-dimethylaminopyridine were subsequently added, the mixture was reacted at 45°C for 15h. The primary product was precipitated in excessive diethyl ether, and centrifuged to collect a solid, the solid product was dissolved in a small amount of toluene, then precipitated in diethyl ether three times, the precipitate was subjected to vacuum drying at 60°C overnight to obtain a polymer network precursor, wherein the end groups were partially modified into the cinnamate groups.

Step 4: the polymer network precursor was dissolved in N,N-dimethylformamide at 80°C, a proper amount of n-butyl acetate solution of hexamethylene diisocyanate and dibutyltin dilaurate was added, and stirred for 5 min. The liquid mixture was rapidly disposed between two glass plates separated by a silicone rubber spacer, and placed in an oven at

80°C for 48 h, subsequently dried under vacuum at 80°C overnight, and finally irradiated in an ultraviolet oven under 4 UV lamps with a wavelength of 380nm and a power of 5W for 10h, so that the polycaprolactone shape memory material was prepared.

Example 4

The method of preparing the polycaprolactone shape memory material comprised the following steps:
Step 1: $5.3\times10^{-5}$ mol of the polyethylene glycol diamine with a weight average molecular weight of 20 kDa was weighed, and added to a saturated aqueous solution of $\alpha$-cyclodextrin (7.25g/50mL, double distilled $H_2O$). The mixture was stirred at room temperature for 24h to obtain a white precipitate, which was then lyophilized in a lyophilizer for 48h to obtain a clathrate.

$2.6\times10^{-3}$ mol of N-benzyloxycarbonyl-L-tyrosine (Z-L-Tyr), BOP reagent, 1-hydroxybenzotriazole (HOBt) and N,N-Diisopropylethylamine (DIEA) were dissolved in a small amount of N,N-Dimethylformamide (DMF) in sequence, the clathrate was added to the solution, the suspension was subjected to the amidation reaction at 25°C for 30h, the suspension was put in excessive ether to precipitate the initial product, and the precipitate was collected by centrifugation at 2,000 rpm for 25 min at room temperature, the precipitate was then continuously washed with a large amount of acetone, methanol and water respectively and stirred for three times, the precipitate was lyophilized to obtain a polyrotaxane (PR).

An appropriate amount of polyrotaxane was weighed and dissolved in 50mL of NaOH solution with a concentration of 1mol/L, an appropriate amount of epoxy propane was dropwise added under the ice bath conditions, and the mixture was stirred overnight. The reaction temperature was gradually raised to room temperature as the ice in the solution melted. The samples were dialyzed and purified with deionized water for one week and then lyophilized. The lyophilized sample was poured into 100 mL of dichloromethane and stirred overnight to filter out free polyethylene glycol decomposed and generated during the hydroxypropylation process, subsequently washed with a large amount of acetone, and the precipitate was centrifugated and collected then dried under vacuum at 60°C to obtain hydroxypropylated polyrotaxane (HP-PR).

Step 2: the HP-PR and purified $\varepsilon$-caprolactone ($\varepsilon$-CL) in a molar ratio (number of active hydroxyl on HP-PR: $\varepsilon$-CL =1: 200) were fed into a dry and silanized round-bottomed flask, 1wt.% of stannous octoate was added in terms of the total mass (i.e., the total weight of HP-PR and $\varepsilon$-caprolactone, similarly hereinafter), the high-purity nitrogen gas was introduced for replacing the air in said round-bottomed flask, the mixture was reacted at 120°C for 48 h. The initial product was then dissolved with a small amount of tetrahydrofuran, precipitated in an excessive amount of n-hexane three times, and the precipitate was vacuum-dried at 60°C for 48 h to obtain a polycaprolactone grafted polyrotaxane copolymer (PCL-g-PR).

Step 3: 0.5 molar equivalent of 4-nitrocinnamate of the number of active hydroxyl groups of HP-PR was weighed, and dissolved in 25 mL of DMF at 50°C, the DMF solution of PCL-g-PR was added to the DMF solution of 4-nitrocinnamic acid and stirred for 30 min. 1 molar equivalent of N,N-diisopropyl carbodiimide and 0.5 molar equivalent of 4-dimethylaminopyridine were subsequently added, the mixture was reacted at 60°C for 15h. The primary product was precipitated in excessive diethyl ether, and centrifuged to collect a solid, the solid product was dissolved in a small amount of toluene, then precipitated in diethyl ether three times, the precipitate was subjected to vacuum drying at 60°C overnight to obtain a polymer network precursor, wherein the end groups were partially modified into the cinnamate groups.

Step 4: the polymer network precursor was dissolved in N,N-dimethylformamide at 80°C, a proper amount of n-butyl acetate solution of hexamethylene diisocyanate and dibutyltin dilaurate was added, and stirred for 5 min. The liquid mixture was rapidly disposed between two glass plates separated by a silicone rubber spacer, and placed in an oven at 80°C for 48 h, subsequently dried under vacuum at 80°C overnight, and finally irradiated in an ultraviolet oven under 4 UV lamps with a wavelength of 375nm and a power of 5W for 13h, so that the polycaprolactone shape memory material was prepared.

Example 5

The method of preparing the polycaprolactone shape memory material comprised the following steps:
Step 1: $5.7\times10^{-5}$ mol of the polyethylene glycol diamine with a weight average molecular weight of 20 kDa was weighed, and added to a saturated aqueous solution of $\alpha$-cyclodextrin (7.25g/50mL, double distilled $H_2O$). The mixture was stirred at 30°C for 24h to obtain a white precipitate, which was then lyophilized in a lyophilizer for 50h to obtain a clathrate.

$2.7\times10^{-3}$ mol of N-benzyloxycarbonyl-L-tyrosine (Z-L-Tyr), BOP reagent, 1-hydroxybenzotriazole (HOBt) and N,N-Diisopropylethylamine (DIEA) were dissolved in a small amount of N,N-Dimethylformamide (DMF) in sequence, the clathrate was added to the solution, the suspension was subjected to the amidation reaction at 25°C for 28h, the suspension was put in excessive ether to precipitate the initial product, and the precipitate was collected by centrifugation at 1,800 rpm for 30 min at room temperature, the precipitate was then continuously washed with a large amount of acetone, methanol, and water respectively and stirred for three times, the precipitate was lyophilized to obtain a polyrotaxane (PR).

An appropriate amount of polyrotaxane was weighed and dissolved in 50mL of NaOH solution with a concentration of 1mol/L, an appropriate amount of epoxy propane was dropwise added under the ice bath conditions, and the mixture was stirred overnight. The reaction temperature was gradually raised to room temperature as the ice in the solution melted. The samples were dialyzed and purified with deionized water for one week and then lyophilized. The lyophilized sample was poured into 100 mL of dichloromethane and stirred overnight to filter out free polyethylene glycol decomposed and generated during the hydroxypropylation process, subsequently washed with a large amount of acetone, and the precipitate was centrifugated and collected then dried under vacuum at 60°C to obtain hydroxypropylated polyrotaxane (HP-PR).

Step 2: the HP-PR and purified ε-caprolactone (ε-CL) in a molar ratio (number of active hydroxyl on HP-PR: ε-CL =1: 400) were fed into a dry and silanized round-bottomed flask, 1wt.% of stannous octoate was added in terms of the total mass, the high-purity nitrogen gas was introduced for replacing the air in said round-bottomed flask, the mixture was reacted at 125°C for 50 h. The initial product was then dissolved with a small amount of tetrahydrofuran, precipitated in an excessive amount of n-hexane three times, and the precipitate was vacuum-dried at 60°C for 48 h to obtain a polycaprolactone grafted polyrotaxane copolymer (PCL-g-PR).

Step 3: 0.5 molar equivalent of 4-nitrocinnamate of the number of active hydroxyl groups of HP-PR was weighed, and dissolved in 25 mL of DMF at 50°C, the DMF solution of PCL-g-PR was added to the DMF solution of 4-nitrocinnamic acid and stirred for 30 min. 1 molar equivalent of N,N-diisopropyl carbodiimide and 0.5 molar equivalent of 4-dimethylaminopyridine were subsequently added, the mixture was reacted at 40°C for 25h. The primary product was precipitated in excessive diethyl ether, and centrifuged to collect a solid, the solid product was dissolved in a small amount of toluene, then precipitated in diethyl ether three times, the precipitate was subjected to vacuum drying at 60°C overnight to obtain a polymer network precursor, wherein the end groups were partially modified into the cinnamate groups.

Step 4: the polymer network precursor was dissolved in N,N-dimethylformamide at 80°C, a proper amount of n-butyl acetate solution of hexamethylene diisocyanate and dibutyltin dilaurate was added, and stirred for 5 min. The liquid mixture was rapidly disposed between two glass plates separated by a silicone rubber spacer, and placed in an oven at 80°C for 48 h, subsequently dried under vacuum at 80°C overnight, and finally irradiated in an ultraviolet oven under 4 UV lamps with a wavelength of 365nm and a power of 5W for 15h, so that the polycaprolactone shape memory material was prepared.

Example 6

The method of preparing the polycaprolactone re-mouldable shape memory material comprised the following steps:

Step 1: $7.4 \times 10^{-5}$ mol of the polyethylene glycol diamine with a weight average molecular weight of 30 kDa was weighed, and added to a saturated aqueous solution of α-cyclodextrin (7.25g/50mL, double distilled $H_2O$). The mixture was stirred at room temperature for 24h to obtain a white precipitate, which was then lyophilized in a lyophilizer for 48h to obtain a clathrate.

$3.5 \times 10^{-3}$ mol of N-benzyloxycarbonyl-L-tyrosine (Z-L-Tyr), BOP reagent, 1-hydroxybenzotriazole (HOBt) and N,N-Diisopropylethylamine (DIEA) were dissolved in a small amount of N,N-Dimethylformamide (DMF) in sequence, the clathrate was added to the solution, the suspension was subjected to the amidation reaction at 25°C for 24h, the suspension was put in excessive ether to precipitate the initial product, and the precipitate was collected by centrifugation at 1,800 rpm for 30 min at room temperature, the precipitate was then continuously washed with a large amount of acetone, methanol, and water respectively and stirred for three times, the precipitate was lyophilized to obtain a polyrotaxane (PR).

An appropriate amount of polyrotaxane was weighed and dissolved in 50mL of NaOH solution with a concentration of 1mol/L, an appropriate amount of epoxy propane was dropwise added under the ice bath conditions, and the mixture was stirred overnight. The reaction temperature was gradually raised to room temperature as the ice in the solution melted. The samples were dialyzed and purified with deionized water for one week and then lyophilized. The lyophilized sample was poured into 100 mL of dichloromethane and stirred overnight to filter out free polyethylene glycol decomposed and generated during the hydroxypropylation process, subsequently washed with a large amount of acetone, and the precipitate was centrifugated and collected then dried under vacuum at 60°C to obtain hydroxypropylated polyrotaxane (HP-PR).

Step 2: the HP-PR and purified ε-caprolactone (ε-CL) in a molar ratio (number of active hydroxyl on HP-PR: ε-CL =1: 600) were fed into a dry and silanized round-bottomed flask, 1wt.% of stannous octoate was added in terms of the total mass, the high-purity nitrogen gas was introduced for replacing the air in said round-bottomed flask, the mixture was reacted at 110°C for 50 h. The initial product was then dissolved with a small amount of tetrahydrofuran, precipitated in an excessive amount of n-hexane three times, and the precipitate was vacuum-dried at 60°C for 48 h to obtain a polycaprolactone grafted polyrotaxane copolymer (PCL-g-PR).

Step 3: 0.5 molar equivalent of 4-nitrocinnamate of the number of active hydroxyl groups of HP-PR was weighed, and dissolved in 25 mL of DMF at 50°C, the DMF solution of PCL-g-PR was added to the DMF solution of 4-nitrocinnamic acid and stirred for 40 min. 1 molar equivalent of N,N-diisopropyl carbodiimide, and 0.5 molar equivalent of 4-dimethylaminopyridine were subsequently added, and the mixture was reacted at 60°C for 20h. The primary product was precipitated in excessive diethyl ether, and centrifuged to collect a solid, the solid product was dissolved in a small amount of toluene, then precipitated in diethyl ether three times, the precipitate was subjected to vacuum drying at 60°C overnight to obtain a polymer network precursor, wherein the end groups were partially modified into the cinnamate groups.

Step 4: the polymer network precursor was dissolved in N,N-dimethylformamide at 80°C, a proper amount of n-butyl acetate solution of hexamethylene diisocyanate and dibutyltin dilaurate was added, and stirred for 10 min. The liquid mixture was rapidly disposed between two glass plates separated by a silicone rubber spacer, and placed in an oven at 80°C for 48 h, subsequently dried under vacuum at 80°C overnight, and finally irradiated in an ultraviolet oven under 4 UV lamps with a wavelength of 380nm and a power of 5W for 12h, so that the polycaprolactone shape memory material was prepared.

Example 7

The method of preparing the polycaprolactone shape memory material comprised the following steps:
Step 1: $5.3\times10^{-5}$ mol of the polyethylene glycol diamine with a weight average molecular weight of 35 kDa was weighed, and added to a saturated aqueous solution of α-CD (7.25g/50mL, double distilled $H_2O$). The mixture was stirred at 30°C for 26h to obtain a white precipitate, which was then lyophilized in a lyophilizer for 48h to obtain a clathrate.

$2.6\times10^{-3}$ mol of N-benzyloxycarbonyl-L-tyrosine (Z-L-Tyr), BOP reagent, 1-hydroxybenzotriazole (HOBt) and N,N-Diisopropylethylamine (DIEA) were dissolved in a small amount of N,N-Dimethylformamide (DMF) in sequence, the clathrate was added to the solution, the suspension was subjected to the amidation reaction at 25°C for 24h, the suspension was put in excessive ether to precipitate the initial product, and the precipitate was collected by centrifugation at 2,000 rpm for 20 min at room temperature, the precipitate was then continuously washed with a large amount of acetone, methanol, and water respectively and stirred for three times, the precipitate was lyophilized to obtain a polyrotaxane (PR).

An appropriate amount of polyrotaxane was weighed and dissolved in 50mL of NaOH solution with a concentration of 1mol/L, an appropriate amount of epoxy propane was dropwise added under the ice bath conditions, and the mixture was stirred overnight. The reaction temperature was gradually raised to room temperature as the ice in the solution melted. The samples were dialyzed and purified with deionized water for one week and then lyophilized. The lyophilized sample was poured into 100 mL of dichloromethane and stirred overnight to filter out free polyethylene glycol decomposed and generated during the hydroxypropylation process, subsequently washed with a large amount of acetone, and the precipitate was centrifugated and collected then dried under vacuum at 60°C to obtain hydroxypropylated polyrotaxane (HP-PR).

Step 2: the HP-PR and purified ε-caprolactone (ε-CL) in a molar ratio (number of active hydroxyl on HP-PR: ε-CL =1: 200) were fed into a dry and silanized round-bottomed flask, 1wt.% of stannous octoate was added in terms of the total mass, the high-purity nitrogen gas was introduced for replacing the air in said round-bottomed flask, the mixture was reacted at 130°C for 45 h. The initial product was then dissolved with a small amount of tetrahydrofuran, precipitated in an excessive amount of n-hexane three times, and the precipitate was vacuum-dried at 60°C for 48 h to obtain a polycaprolactone grafted polyrotaxane copolymer (PCL-g-PR).

Step 3: 0.5 molar equivalent of 4-nitrocinnamate of the number of active hydroxyl groups of HP-PR was weighed, and dissolved in 25 mL of DMF at 50°C, the DMF solution of PCL-g-PR was added to the DMF solution of 4-nitrocinnamic acid and stirred for 30 min. 1 molar equivalent of N,N-diisopropyl carbodiimide and 0.5 molar equivalent of 4-dimethylaminopyridine were subsequently added, the mixture was reacted at 50°C for 20h. The primary product was precipitated in excessive diethyl ether, and centrifuged to collect a solid, the solid product was dissolved in a small amount of toluene, then precipitated in diethyl ether three times, the precipitate was subjected to vacuum drying at 60°C overnight to obtain a polymer network precursor, wherein the end groups were partially modified into the cinnamate groups.

Step 4: the polymer network precursor was dissolved in N,N-dimethylformamide at 80°C, a proper amount of n-butyl acetate solution of hexamethylene diisocyanate and dibutyltin dilaurate was added, and stirred for 5 min. The liquid mixture was rapidly disposed between two glass plates separated by a silicone rubber spacer, and placed in an oven at 80°C for 48 h, subsequently dried under vacuum at 80°C overnight, and finally irradiated in an ultraviolet oven under 4 UV lamps with a wavelength of 370nm and a power of 5W for 15h, so that the polycaprolactone shape memory material was prepared.

Example 8

The method of preparing the polycaprolactone shape memory material comprised the following steps:
Step 1: $6.9\times10^{-5}$ mol of the polyethylene glycol diamine with a weight average molecular weight of 35 kDa was weighed, and added to a saturated aqueous solution of α-CD (7.25g/50mL, double distilled $H_2O$). The mixture was stirred at room temperature for 24h to obtain a white precipitate, which was then lyophilized in a lyophilizer for 48h to obtain a clathrate.

$3.5\times10^{-3}$ mol of N-benzyloxycarbonyl-L-tyrosine (Z-L-Tyr), BOP reagent, 1-hydroxybenzotriazole (HOBt) and

N,N-Diisopropylethylamine (DIEA) were dissolved in a small amount of N,N-Dimethylformamide (DMF) in sequence, the clathrate was added to the solution, the suspension was subjected to the amidation reaction at 25°C for 26h, the suspension was put in excessive ether to precipitate the initial product, and the precipitate was collected by centrifugation at 1,800 rpm for 30 min at room temperature, the precipitate was then continuously washed with a large amount of acetone, methanol, and water respectively and stirred for three times, the precipitate was lyophilized to obtain a polyrotaxane (PR).

An appropriate amount of polyrotaxane was weighed and dissolved in 50mL of NaOH solution with a concentration of 1mol/L, an appropriate amount of epoxy propane was dropwise added under the ice bath conditions, and the mixture was stirred overnight. The reaction temperature was gradually raised to room temperature as the ice in the solution melted. The samples were dialyzed and purified with deionized water for one week and then lyophilized. The lyophilized sample was poured into 100 mL of dichloromethane and stirred overnight to filter out free polyethylene glycol decomposed and generated during the hydroxypropylation process, subsequently washed with a large amount of acetone, and the precipitate was centrifugated and collected then dried under vacuum at 60°C to obtain hydroxypropylated polyrotaxane (HP-PR).

Step 2: the HP-PR and purified ε-caprolactone (ε-CL) in a molar ratio (number of active hydroxyl on HP-PR: ε-CL =1: 400) were fed into a dry and silanized round-bottomed flask, 1wt.% of stannous octoate was added in terms of the total mass, the high-purity nitrogen gas was introduced for replacing the air in said round-bottomed flask, the mixture was reacted at 110°C for 50 h. The initial product was then dissolved with a small amount of tetrahydrofuran, precipitated in an excessive amount of n-hexane three times, and the precipitate was vacuum-dried at 60°C for 48 h to obtain a polycaprolactone grafted polyrotaxane copolymer (PCL-g-PR).

Step 3: 0.5 molar equivalent of 4-nitrocinnamate of the number of active hydroxyl groups of HP-PR was weighed, and dissolved in 25 mL of DMF at 50°C, the DMF solution of PCL-g-PR was added to the DMF solution of 4-nitrocinnamic acid and stirred for 30 min. 1 molar equivalent of N,N-diisopropyl carbodiimide and 0.5 molar equivalent of 4-dimethylaminopyridine were subsequently added, the mixture was reacted at 60°C for 20h. The primary product was precipitated in excessive diethyl ether, and centrifuged to collect a solid, the solid product was dissolved in a small amount of toluene, then precipitated in diethyl ether three times, the precipitate was subjected to vacuum drying at 60°C overnight to obtain a polymer network precursor, wherein the end groups were partially modified into the cinnamate groups.

Step 4: the polymer network precursor was dissolved in N,N-dimethylformamide at 80°C, a proper amount of n-butyl acetate solution of hexamethylene diisocyanate and dibutyltin dilaurate was added, and stirred for 10 min. The liquid mixture was rapidly disposed between two glass plates separated by a silicone rubber spacer, and placed in an oven at 80°C for 48 h, subsequently dried under vacuum at 80°C overnight, and finally irradiated in an ultraviolet oven under 4 UV lamps with a wavelength of 365nm and a power of 5W for 15h, so that the polycaprolactone shape memory material was prepared.

Example 9

The method of preparing the polycaprolactone shape memory material comprised the following steps:
Step 1: $5.8\times10^{-5}$ mol of the polyethylene glycol diamine with a weight average molecular weight of 35 kDa was weighed, and added to a saturated aqueous solution of α-cyclodextrin (7.25g/50mL, double distilled $H_2O$). The mixture was stirred at room temperature for 24h to obtain a white precipitate, which was then lyophilized in a lyophilizer for 48h to obtain a clathrate.

$2.7\times10^{-3}$ mol of N-benzyloxycarbonyl-L-tyrosine (Z-L-Tyr), BOP reagent, 1-hydroxybenzotriazole (HOBt) and N,N-Diisopropylethylamine (DIEA) were dissolved in a small amount of N,N-Dimethylformamide (DMF) in sequence, the clathrate was added to the solution, the suspension was subjected to the amidation reaction at 20°C for 30h, the suspension was put in excessive ether to precipitate the initial product, and the precipitate was collected by centrifugation at 2,000 rpm for 20 min at room temperature, the precipitate was then continuously washed with a large amount of acetone, methanol, and water respectively and stirred for three times, the precipitate was lyophilized to obtain a polyrotaxane (PR).

An appropriate amount of polyrotaxane was weighed and dissolved in 50mL of NaOH solution with a concentration of 1mol/L, an appropriate amount of epoxy propane was dropwise added under the ice bath conditions, and the mixture was stirred overnight. The reaction temperature was gradually raised to room temperature as the ice in the solution melted. The samples were dialyzed and purified with deionized water for one week and then lyophilized. The lyophilized sample was poured into 100 mL of dichloromethane and stirred overnight to filter out free polyethylene glycol decomposed and generated during the hydroxypropylation process, subsequently washed with a large amount of acetone, and the precipitate was centrifugated and collected then dried under vacuum at 60°C to obtain hydroxypropylated polyrotaxane (HP-PR).

Step 2: the HP-PR and purified ε-caprolactone (ε-CL) in a molar ratio (number of active hydroxyl on HP-PR: ε-CL =1: 600) were fed into a dry and silanized round-bottomed flask, 1wt.% of stannous octoate was added in terms of the total mass, the high-purity nitrogen gas was introduced for replacing the air in said round-bottomed flask, the mixture was reacted at 130°C for 48 h. The initial product was then dissolved with a small amount of tetrahydrofuran, precipitated in an

excessive amount of n-hexane three times, and the precipitate was vacuum-dried at 60°C for 48 h to obtain a polycaprolactone grafted polyrotaxane copolymer (PCL-g-PR).

Step 3: 0.5 molar equivalent of 4-nitrocinnamate of the number of active hydroxyl groups of HP-PR was weighed, and dissolved in 25 mL of DMF at 50°C, the DMF solution of PCL-g-PR was added to the DMF solution of 4-nitrocinnamic acid and stirred for 30 min. 1 molar equivalent of N,N-diisopropyl carbodiimide and 0.5 molar equivalent of 4-dimethylaminopyridine were subsequently added, the mixture was reacted at 40°C for 25h. The primary product was precipitated in excessive diethyl ether, and centrifuged to collect a solid, the solid product was dissolved in a small amount of toluene, then precipitated in diethyl ether three times, the precipitate was subjected to vacuum drying at 60°C overnight to obtain a polymer network precursor, wherein the end groups were partially modified into the cinnamate groups.

Step 4: the polymer network precursor was dissolved in N,N-dimethylformamide at 80°C, a proper amount of n-butyl acetate solution of hexamethylene diisocyanate and dibutyltin dilaurate was added, and stirred for 10 min. The liquid mixture was rapidly disposed between two glass plates separated by a silicone rubber spacer, and placed in an oven at 80°C for 48 h, subsequently dried under vacuum at 80°C overnight, and finally irradiated in an ultraviolet oven under 4 UV lamps with a wavelength of 380nm and a power of 5W for 12h, so that the polycaprolactone shape memory material was prepared.

Comparative Example 1

A thermally crosslinked polycaprolactone shape memory plate material was prepared from the following components in parts by weight: 90 parts of polycaprolactone, 5 parts of a crosslinking agent benzoyl peroxide, 80 parts of solvent dichloromethane and 1 part of a release agent.

The method of preparing the thermally crosslinked polycaprolactone shape memory plate material comprised the following preparation steps:

Step 1: polycaprolactone, cross-linking agent benzoyl peroxide, and solvent dichloromethane were placed in a round-bottom flask for performing the solution blending, the mixture was subjected to an ultrasonic treatment for 30 min, and transferred to a mechanical stirrer for stirring for 1 h, the mixture was obtained;

Step 2: the obtained mixture was used for volatilizing the solvent for 1-2 h at room temperature, and subjected to vacuum drying at 50-70°C for 24 h to obtain a PCL/BPO solid mixture;

Step 3: the solid mixture obtained in step (2) was placed in a customized iron mold, and sprayed with a mold release agent, a flat vulcanizing machine was used for causing the peroxide to initiate the polycaprolactone to be subject to a thermally crosslinking treatment at the temperature of 140-160°C for 5-15 min under the maximum pressure of 10 MPa, the thermally crosslinked polycaprolactone shape memory plate material was obtained.

The products obtained in Examples 1-9 and Comparative Example 1 were subjected to measurements of gel content, shape recovery velocity, shape recovery rate, elongation at break, and tensile strength, the results were shown in Table 1.

Table 1 Comparison of the performance parameters of the Examples and the Comparative Example

| Samples | Gel content / wt% | Shape recovery velocity from 100% strain /s | The shape recovery rate from 100% strain /% | Elongation at break /% | Tensile strength /MPa |
|---|---|---|---|---|---|
| Example 1 | 77.6 | 2 | 99.6 | 900 | 26 |
| Example 2 | 66.2 | 2 | 98.3 | 965 | 41 |
| Example 3 | 37.3 | 3 | 95.2 | 1130 | 42 |
| Example 4 | 71.7 | 2 | 99.4 | 950 | 29 |
| Example 5 | 64.0 | 2 | 99.2 | 992 | 40 |
| Example 6 | 42.3 | 3 | 97.7 | 1204 | 43 |
| Example 7 | 62.1 | 3 | 98.9 | 960 | 30 |
| Example 8 | 53.7 | 3 | 98.0 | 973 | 42 |
| Example 9 | 44.4 | 4 | 97.9 | 1320 | 44 |

(continued)

| Samples | Gel content / wt% | Shape recovery velocity from 100% strain /s | The shape recovery rate from 100% strain /% | Elongation at break /% | Tensile strength /MPa |
|---|---|---|---|---|---|
| Comparative Example 1 | 60.9 | 11 | 91.4 | 658 | 43 |

As can be seen from the results in Table 1, the polycaprolactone shape memory materials of Examples 1-9 prepared with the method of the present disclosure have a faster shape recovery velocity and a higher shape recovery rate than the products prepared by the Comparative Example 1, and can recover to 95% or more of the original shape within 5s. In addition, when the elongation at break and the tensile strength of the product obtained in Examples 1-9 are compared with the measurement result of Comparative Example 1, the elongation at break of the product obtained in Examples 1-9 is improved, for instance, the elongation at break of the product prepared in Example 9 is improved by one time, which demonstrates that the toughness of shape memory material can be improved.

## Claims

1. A polycaprolactone shape memory material comprising a plurality of modified polyrotaxane macromolecular chains, and a plurality of composite macromolecular chains connected to different modified polyrotaxane macromolecular chains, wherein each of the composite macromolecular chains comprises at least two segments of polycaprolactone macromolecular chains, a reversible linking group between different polycaprolactone macromolecular chains, and a linking modification group for linking cyclodextrin-derived cyclic structures comprised in the polycaprolactone macromolecular chains and the modified polyrotaxane macromolecular chains, wherein the reversible linking group is a photo-reversible linking group.

2. The polycaprolactone shape memory material of claim 1, wherein the photo-reversible linking group is derived from a compound having a photo-reversible group, preferably the compound is selected from nitrocinnamate compounds and/or 4-((4-methyl-2-oxo-2H-chromene-7-yl) oxy)butyric acid.

3. The polycaprolactone shape memory material of claims 1 or 2, wherein the linking modification group is derived from a compound for hydroxypropylation, preferably a group represented by the structural formula $-CH_2-CH(CH_3)-O-$.

4. The polycaprolactone shape memory material of any one of claims 1-3, wherein the total amount of the polycaprolactone molecular chains is from 80wt% to 100wt%, preferably from 95wt% to 99.9wt%, based on the total amount of the modified polyrotaxane macromolecular chains; preferably, the polycaprolactone macromolecular chains have a weight average molecular weight within the range from 5,000kDa to 100,0000 kDa, preferably within the range from 10,000kDa to 80,000 kDa, wherein the weight average molecular weight is measured through gel permeation chromatography as specified in the description; preferably, the modified polyrotaxane macromolecular chains have a weight average molecular weight from 10kDa to 100kDa, preferably from 30kDa to 90 kDa, wherein the weight average molecular weight is measured through gel permeation chromatography as specified in the description.

5. The polycaprolactone shape memory material of any one of claims 1-4, wherein the polycaprolactone shape memory material has an elongation at break of more than 900%, the polycaprolactone shape memory material has a gel content within the range from 37wt% to 78wt%, and the time for the polycaprolactone shape memory material to recover from 100% strain to an original shape is not more than 5s, wherein the elongation at break is measured through mechanical property testing, the gel content is measured through a Soxhlet extraction method, the shape recovery velocity and the shape recovery rate are measured through a plate heating and stretching method.

6. A composition for preparing the polycaprolactone shape memory material of any one of claims 1-5 comprising a polyrotaxane initiator, an end group modifier, ε-caprolactone, a catalyst, and a cross-linking agent; wherein the end group modifier is selected from nitrocinnamate compounds and/or 4-((4-methyl-2-oxo-2H-chromene-7-yl) oxy) butyric acid.

7. The composition of claim 6, wherein the polyrotaxane initiator has a weight average molecular weight from 10kDa to 100kDa, preferably from 30kDa to 90 kDa, wherein the weight average molecular weight is measured through gel

permeation chromatography as specified in the description;

preferably, the catalyst is at least one selected from the group consisting of stannous octoate, lithium diisopropylamide, scandium trifluoromethane sulfonate, and phosphazene base;
preferably, the crosslinking agent is selected from diisocyanate, preferably at least one selected from the group consisting of hexamethylene diisocyanate, toluene diisocyanate, isophorone diisocyanate, and lysine diisocyanate.

**8.** The composition of claim 6 or 7, wherein the composition comprises the polyrotaxane initiator within a range from 0.01wt% to 0.1wt%, ε-caprolactone within a range from 99wt% to 99.99wt%, the catalyst within a range from 0.5wt% to 2wt%, the end group modifier within a range from 0.02wt% to 0.05wt%, and the crosslinking agent within a range from 0.1wt% to 1wt%, based on the total weight of the composition.

**9.** A method for preparing a polycaprolactone shape memory material comprising the following steps:

(1) subjecting the polyrotaxane to a hydroxypropylation to obtain hydroxypropylated polyrotaxane;
(2) carrying out a ring-opening polymerization on the hydroxypropylated polyrotaxane and ε-caprolactone in the presence of a catalyst, to obtain a polycaprolactone grafted polyrotaxane copolymer;
(3) subjecting the polycaprolactone grafted polyrotaxane copolymer and photo-reversible groups of an end group modifier to a modification reaction to obtain a polymer network precursor, wherein the end group part of the polymer network precursor is modified into the photo-reversible group;
(4) promoting the reaction of the photo-reversible group to cross-link the polymer network precursor in the presence of a cross-linking agent and the action of heating and ultraviolet light, to prepare the polycaprolactone shape memory material.

**10.** The method of claim 9, wherein the catalyst in step (2) is at least one selected from the group consisting of stannous octoate, lithium diisopropylamide, scandium trifluoromethane sulfonate, and phosphazene base;

preferably, the used amount of the catalyst is from 0.5wt% to 2wt%, more preferably from 0.8wt% to 1.2wt%, based on the total mass of the hydroxypropylated polyrotaxane and ε-caprolactone;
preferably, the mole ratio of the hydroxypropylated polyrotaxane in terms of the number of active hydroxyls contained therein to ε-caprolactone is 1: (50-600), more preferably 1: (50-200);
preferably, the ring-opening polymerization temperature is within the range from 100°C to 140°C, more preferably within the range from 110°C to 130°C, and the ring-opening polymerization time is within the range from 40h to 50h, more preferably within the range from 45h to 50 h;
preferably, the process of ring-opening polymerization comprises: subjecting the mixture of hydroxypropylated polyrotaxane, ε-caprolactone and the catalyst to a polymerization reaction under the protection of nitrogen gas; dissolving the obtained primary product with tetrahydrofuran, then carrying out precipitation in n-hexane for many times, subsequently drying the obtained solid-phase precipitate to prepare the polycaprolactone grafted polyrotaxane copolymer.

**11.** The method of claim 9 or 10, wherein the molar ratio of the end group modifier to the polycaprolactone grafted polyrotaxane copolymer in step (3) is (100-400): 1;

preferably, the end group modifier is selected from compounds having a photo-reversible group, more preferably selected from nitrocinnamate compounds and/or 4-((4-methyl-2-oxo-2H-chromene-7-yl)oxy)butyric acid; preferably, the temperature of the end group modification reaction is within the range from 40°C to 60°C, and the time of the end group modification reaction is within the range from 15h to 25h;
preferably, the process of the end group modification reaction comprises: mixing the end group modifier and the polycaprolactone grafted polyrotaxane copolymer respectively with a solution prepared with a first organic solvent, adding a water absorbent-I and an esterification catalyst into the obtained mixed solution, and then carrying out the end group modification reaction; subjecting the obtained initial product to precipitation for many times, and drying the obtained solid precipitate to obtain the polymer network precursor;
preferably, the first organic solvent is at least one selected from the group consisting of tetrahydrofuran, N,N-dimethylformamide, dichloromethane, and dioxane; the water absorbent-I is at least one selected from N,N-diisopropyl carbodiimide, dicyclohexyl carbodiimide, and concentrated sulfuric acid; the esterification catalyst is at least one selected from the group consisting of 4-dimethylamino pyridine, p-toluene sulfonic acid, and thionyl chloride;

preferably, the first organic solvent is used in an amount such that the concentration of the mixed solution is within the range from 1g/mL to 10g/mL, more preferably within the range from 2g/mL to 8 g/mL; the used amount of the water absorbent-I is from 1wt% to 5wt%, more preferably from 1.5wt% to 4.5wt% of the total amount of the end group modifier and the polycaprolactone grafted polyrotaxane copolymer; the molar ratio of the esterification catalyst to the polycaprolactone grafted polyrotaxane copolymer is 1: (1.5-3.5), more preferably 1: (2-3);
preferably, the polymer network precursor has a plurality of slidable polycaprolactone molecular chains, and a part of the chain ends of the polycaprolactone molecular chains contain a photo-reversible group derived from the end group modifier, preferably, the photo-reversible group is a coumarin group or a cinnamate group.

**12.** The method of any one of claims 9-11, wherein the crosslinking agent in step (4) is selected from diisocyanates, preferably at least one selected from the group consisting of hexamethylene diisocyanate, toluene diisocyanate, isophorone diisocyanate, and lysine diisocyanate;

preferably, the used amount of the crosslinking agent is from 0.1wt% to 1wt% of the polymer network precursor;
preferably, the heating temperature is within the range from 70°C to 90°C, and the heating time is within the range from 45h to 60h;
preferably, the wavelength of the ultraviolet light is within the range from 250nm to 380nm;
preferably, the crosslinking process comprises: dissolving the polymer network precursor in a second organic solvent, then adding a butyl acetate solution of the crosslinking agent and the crosslinking catalyst to obtain a liquid mixture; heating and drying the liquid mixture, then irradiating under the ultraviolet light to obtain the polycaprolactone shape memory material;
preferably, the second organic solvent is at least one selected from the group consisting of tetrahydrofuran, N,N-dimethylformamide, dichloromethane, and dioxane; the crosslinking catalyst is at least one selected from the group consisting of dibutyltin dilaurate, an organic bismuth catalyst, and N,N-dimethyl cyclohexylamine;
preferably, the second organic solvent is used in an amount such that the concentration of the liquid mixture is within the range from 1g/mL to 10g/mL, preferably within the range from 2g/mL to 8 g/mL; the used amount of the crosslinking catalyst is from 1wt% to 5wt%, preferably from 2wt% to 4wt% of the polymer network precursor.

**13.** The method of any one of claims 9-12, wherein the polyrotaxane is prepared with the following process: reacting $\alpha$-cyclodextrin with polyethylene glycol diamine in the presence of a large steric hindrance compound;

preferably, the large steric hindrance compound is at least one selected from the group consisting of N-benzyloxycarbonyl-L-tyrosine, 1-adamantane acetic acid, fluorescein isothiocyanate, and L-phenylalanine;
preferably, the polyethylene glycol diamine has a weight average molecular weight from 5kDa to 40kDa, preferably from 10kDa to 35 kDa, wherein the weight average molecular weight is measured through gel permeation chromatography as specified in the description;
preferably, the molar ratio of $\alpha$-cyclodextrin to the polyethylene glycol diamine is (50-100): 1, more preferably (80-90): 1;
preferably, the molar ratio of the large steric hindrance compound to the polyethylene glycol diamine is (2-10): 1, more preferably (5-8): 1;
preferably, the reaction process comprises the following steps:

(i) adding the polyethylene glycol diamine into a saturated aqueous solution of $\alpha$-cyclodextrin, stirring at the temperature from 20°C to 35°C for a time from 20h to 40h, and drying the obtained white precipitate to obtain a clathrate compound;
(ii) dissolving the large steric hindrance compound, the amidation catalyst, and the water absorbent-II in a third organic solvent to prepare a solution, then adding the clathrate compound into the solution, subjecting the obtained suspension to an amidation reaction and then performing precipitation, and washing and drying the obtained solid-phase precipitate to prepare the polyrotaxane;

preferably, the amidation catalyst is at least one selected from the group consisting of Carter condensation reagent, zinc chloride, and ferric chloride hexahydrate; the water absorbent-II is at least one selected from the group consisting of N,N-diisopropylethylamine, 1-hydroxybenzotriazole, and dicyclohexylcarbodiimide; the third organic solvent is at least one selected from the group consisting of N,N-dimethylformamide, tetrahydrofuran, and dichloromethane;
preferably, the used amount of the amidation catalyst is from 1wt% to 5wt%, preferably from 2wt% to 4wt% of the total amount of the polyethylene glycol diamine and $\alpha$ -cyclodextrin; the used amount of the water absorbent agent-II is from 1wt% to 5wt%, preferably from 2wt% to 4wt% of the total amount of the polyethylene glycol

diamine and the alpha-cyclodextrin; the third organic solvent is used in an amount such that the concentration of the solution is within the range from 1g/mL to 10g/mL, more preferably within the range from 2g/mL to 8 g/mL; preferably, the polyrotaxane has a weight average molecular weight within the range from 10kDa to 100kDa, more preferably within the range from 30kDa to 90 kDa, wherein the weight average molecular weight is measured through gel permeation chromatography as specified in the description.

**14.** A use of the polycaprolactone shape memory material of any one of claims 1-5 in a medical recoverable fixation material, preferably the use comprises a shape memory medical fixation clamp.

**Patentansprüche**

**1.** Polycaprolactonformgedächtnismaterial, umfassend eine Vielzahl modifizierter Polyrotaxan-Makromolekülketten sowie eine Vielzahl von Verbund-Makromolekülketten, die mit verschiedenen modifizierten Polyrotaxan-Makromolekülketten verbunden sind, wobei jede der Verbund-Makromolekülketten umfasst: mindestens zwei Segmente aus Polycaprolacton-Makromolekülketten, eine reversible Verbindungsgruppe zwischen verschiedenen Polycaprolacton-Makromolekülketten, und eine Verbindungsmodifikationsgruppe zur Verknüpfung von aus Cyclodextrin abgeleiteten zyklischen Strukturen, die in den Polycaprolacton-Makromolekülketten und den modifizierten Polyrotaxan-Makromolekülketten enthalten sind, wobei die reversible Verbindungsgruppe eine photoreversible Verbindungsgruppe ist.

**2.** Polycaprolactonformgedächtnismaterial nach Anspruch 1, wobei die photoreversible Verbindungsgruppe von einer Verbindung mit einer photoreversiblen Gruppe abgeleitet ist, wobei die Verbindung vorzugsweise aus Nitrocinnamat-Verbindungen und/oder 4-((4-Methyl-2-oxo-2H-chromen-7-yl)oxy)buttersäure ausgewählt ist;

**3.** Polycaprolactonformgedächtnismaterial nach Anspruch 1 oder 2, wobei die Verbindungsmodifikationsgruppe von einer Verbindung zur Hydroxypropylierung abgeleitet ist, vorzugsweise einer Gruppe, die durch die Strukturformel $-CH_2-CH(CH_3)-O-$ repräsentiert wird.

**4.** Polycaprolactonformgedächtnismaterial nach einem der Ansprüche 1-3, wobei die Gesamtmenge der Polycaprolacton-Molekülketten 80 Gew.-% bis 100 Gew.-%, vorzugsweise 95 Gew.-% bis 99,9 Gew.-%, bezogen auf die Gesamtmenge der modifizierten Polyrotaxan-Makromolekülketten, beträgt;

vorzugsweise weisen die Polycaprolacton-Makromolekülketten ein mittleres Molekulargewicht im Bereich von 5.000 kDa bis 100.000 kDa, vorzugsweise im Bereich von 10.000 kDa bis 80.000 kDa auf, wobei das mittlere Molekulargewicht mittels Gelpermeationschromatographie, wie in der Beschreibung angegeben, gemessen wird;
vorzugsweise weisen die modifizierten Polyrotaxan-Makromolekülketten ein mittleres Molekulargewicht von 10 kDa bis 100 kDa, vorzugsweise von 30 kDa bis 90 kDa, auf, wobei das mittlere Molekulargewicht mittels Gelpermeationschromatographie, wie in der Beschreibung angegeben, gemessen wird.

**5.** Polycaprolactonformgedächtnismaterial nach einem der Ansprüche 1-4, wobei das Polycaprolactonformgedächtnismaterial eine Bruchdehnung von mehr als 900 % aufweist, das Polycaprolactonformgedächtnismaterial einen Gelgehalt im Bereich von 37 Gew.-% bis 78 Gew.-% aufweist, und die Zeit, die das Polycaprolactonformgedächtnismaterial benötigt, um sich von einer Dehnung von 100 % wieder in seine ursprüngliche Form zurückzubilden, nicht mehr als 5 s beträgt, wobei die Bruchdehnung durch mechanische Eigenschaftsprüfung gemessen wird, der Gelgehalt mittels eines Soxhlet-Extraktionsverfahrens bestimmt wird und die Formrückstellgeschwindigkeit sowie die Formrückstellrate mittels eines Plattenheizund Dehnungsverfahrens gemessen werden.

**6.** Zusammensetzung zur Herstellung des Polycaprolactonformgedächtnismaterials nach einem der Ansprüche 1-5, umfassend einen Polyrotaxan-Initiator, einen Endgruppenmodifikator, ε-Caprolacton, einen Katalysator und ein Vernetzungsmittel; wobei der Endgruppenmodifikator aus Nitrocinnamat-Verbindungen und/oder 4-((4-Methyl-2-oxo-2H-chromen-7-yl)oxy)buttersäure ausgewählt ist.

**7.** Zusammensetzung nach Anspruch 6, wobei der Polyrotaxan-Initiator ein mittleres Molekulargewicht von 10 kDa bis 100 kDa, vorzugsweise von 30 kDa bis 90 kDa aufweist, wobei das mittlere Molekulargewicht mittels Gelpermeationschromatographie, wie in der Beschreibung angegeben, gemessen wird;

vorzugsweise ist der Katalysator mindestens einer ausgewählt aus der Gruppe bestehend aus Zinn(II)-octoat, Lithiumdiisopropylamid, Scandiumtrifluormethansulfonat und Phosphazenbase;
vorzugsweise ist das Vernetzungsmittel aus Diisocyanaten ausgewählt, vorzugsweise mindestens eines ausgewählt aus der Gruppe bestehend aus Hexamethylendiisocyanat, Toluoldiisocyanat, Isophorondiisocyanat und Lysindiisocyanat.

**8.** Zusammensetzung nach Anspruch 6 oder 7, wobei die Zusammensetzung den Polyrotaxan-Initiator in einem Bereich von 0,01 Gew.-% bis 0,1 Gew.-%, ε-Caprolacton in einem Bereich von 99 Gew.-% bis 99,99 Gew.-%, den Katalysator in einem Bereich von 0,5 Gew.-% bis 2 Gew.-%, den Endgruppenmodifikator in einem Bereich von 0,02 Gew.-% bis 0,05 Gew.-% und das Vernetzungsmittel in einem Bereich von 0,1 Gew.-% bis 1 Gew.-%, bezogen auf das Gesamtgewicht der Zusammensetzung, umfasst.

**9.** Verfahren zur Herstellung eines Polycaprolactonformgedächtnismaterials, die folgenden Schritte umfassend:

(1) Unterziehen des Polyrotaxans einer Hydroxypropylierung, um hydroxypropyliertes Polyrotaxan zu erhalten;
(2) Durchführen einer Ringöffnungspolymerisation an dem hydroxypropylierten Polyrotaxan und dem ε-Caprolacton in Gegenwart eines Katalysators, um ein mit Polycaprolacton gepfropftes Polyrotaxan-Copolymer zu erhalten;
(3) Unterziehen des mit Polycaprolacton gepfropften Polyrotaxan-Copolymers und der photoreversiblen Gruppen eines Endgruppenmodifikators einer Modifikationsreaktion, um einen Polymernetzwerk-Vorläufer zu erhalten, wobei der Endgruppenbereich des Polymernetzwerk-Vorläufers in die photoreversible Gruppe umgewandelt wird;
(4) Fördern der Reaktion der photoreversiblen Gruppe zur Vernetzung des Polymernetzwerk-Vorläufers in Gegenwart eines Vernetzungsmittels und unter Einwirkung von Wärme und ultraviolettem Licht, um das Polycaprolactonformgedächtnismaterial herzustellen.

**10.** Verfahren nach Anspruch 9, wobei der Katalysator in Schritt (2) mindestens einer ist, ausgewählt aus der Gruppe bestehend aus Zinn(II)-octoat, Lithiumdiisopropylamid, Scandiumtrifluormethansulfonat und Phosphazenbase; vorzugsweise beträgt die eingesetzte Menge des Katalysators 0,5 Gew.-% bis 2 Gew.-%, mehr bevorzugt 0,8 Gew.-% bis 1,2 Gew.-%, bezogen auf die Gesamtmasse des hydroxypropylierten Polyrotaxans und des ε-Caprolactons;

vorzugsweise beträgt das Molverhältnis des hydroxypropylierten Polyrotaxans, bezogen auf die Anzahl der darin enthaltenen aktiven Hydroxylgruppen, zu ε-Caprolacton 1:(50-600), mehr bevorzugt 1:(50-200);
vorzugsweise liegt die Temperatur der Ringöffnungspolymerisation im Bereich von 100 °C bis 140 °C, mehr bevorzugt im Bereich von 110 °C bis 130 °C, und der Zeitraum der Ringöffnungspolymerisation im Bereich von 40 h bis 50 h, mehr bevorzugt im Bereich von 45 h bis 50 h;
vorzugsweise umfasst der Prozess der Ringöffnungspolymerisation: das Unterziehen des Gemisches aus hydroxypropyliertem Polyrotaxan, ε-Caprolacton und dem Katalysator einer Polymerisationsreaktion unter dem Schutz von Stickstoffgas; Lösen des erhaltenen Primärprodukts in Tetrahydrofuran, anschließend die vielfache Durchführung einer Ausfällung in n-Hexan, und danach die Trocknung des erhaltenen Festphasen-Niederschlags, um das mit Polycaprolacton gepfropfte Polyrotaxan-Copolymer herzustellen.

**11.** Verfahren nach Anspruch 9 oder 10, wobei das Molverhältnis des Endgruppenmodifikators zum mit Polycaprolacton gepfropften Polyrotaxan-Copolymer in Schritt (3) (100-400):1 beträgt;

vorzugsweise ist der Endgruppenmodifikator aus Verbindungen mit einer photoreversiblen Gruppe ausgewählt, mehr bevorzugt ausgewählt aus Nitrocinnamat-Verbindungen und/oder 4-((4-Methyl-2-oxo-2H-chromen-7-yl)oxy)buttersäure;
vorzugsweise liegt die Temperatur der Endgruppenmodifikationsreaktion im Bereich von 40 °C bis 60 °C, und der Zeitraum der Endgruppenmodifikationsreaktion liegt im Bereich von 15 h bis 25 h;
vorzugsweise umfasst der Prozess der Endgruppenmodifikationsreaktion: das Mischen des Endgruppenmodifikators und des mit Polycaprolacton gepfropften Polyrotaxan-Copolymers jeweils mit einer mit einem ersten organischen Lösungsmittel hergestellten Lösung, das Hinzufügen eines Wasserabsorptionsmittels I und eines Veresterungskatalysators zu der erhaltenen gemischten Lösung und anschließendes Durchführen der Endgruppenmodifikationsreaktion; vielfaches Ausfällen des erhaltenen Ausgangsprodukts, und Trocknung des erhaltenen festen Niederschlags, um den Polymernetzwerk-Vorläufer zu erhalten;
vorzugsweise ist das erste organische Lösungsmittel mindestens eines, ausgewählt aus der Gruppe bestehend

aus Tetrahydrofuran, N,N-Dimethylformamid, Dichlormethan und Dioxan; das Wasserabsorptionsmittel I ist mindestens eines ausgewählt aus N,N-Diisopropylcarbodiimid, Dicyclohexylcarbodiimid und konzentrierter Schwefelsäure; der Veresterungskatalysator ist mindestens einer ausgewählt aus der Gruppe bestehend aus 4-Dimethylaminopyridin, p-Toluolsulfonsäure und Thionylchlorid;
vorzugsweise wird das erste organische Lösungsmittel in einer solchen Menge verwendet, dass die Konzentration der gemischten Lösung im Bereich von 1 g/ml bis 10 g/ml, mehr bevorzugt im Bereich von 2 g/ml bis 8 g/ml liegt; die eingesetzte Menge des Wasserabsorptionsmittels I beträgt 1 Gew.-% bis 5 Gew.-%, mehr bevorzugt 1,5 Gew.-% bis 4,5 Gew.-%, bezogen auf die Gesamtmenge des Endgruppenmodifikators und des mit Polycaprolacton gepfropften Polyrotaxan-Copolymers; das Molverhältnis des Veresterungskatalysators zu dem mit Polycaprolacton gepfropften Polyrotaxan-Copolymer beträgt 1:(1,5-3,5), mehr bevorzugt 1:(2-3);
vorzugsweise weist der Polymernetzwerk-Vorläufer eine Vielzahl von verschiebbaren Polycaprolacton-Molekülketten auf, und ein Teil der Kettenenden der Polycaprolacton-Molekülketten enthält eine vom Endgruppenmodifikator abgeleitete photoreversible Gruppe; vorzugsweise ist die photoreversible Gruppe eine Cumarin-Gruppe oder eine Cinnamat-Gruppe.

**12.** Verfahren nach einem der Ansprüche 9-11, wobei das Vernetzungsmittel in Schritt (4) aus Diisocyanaten ausgewählt ist, vorzugsweise mindestens eines aus der Gruppe bestehend aus Hexamethylendiisocyanat, Toluoldiisocyanat, Isophorondiisocyanat und Lysindiisocyanat;

vorzugsweise beträgt die eingesetzte Menge des Vernetzungsmittels 0,1 Gew.-% bis 1 Gew.-% des Polymernetzwerk-Vorläufers;
vorzugsweise liegt die Erwärmungstemperatur im Bereich von 70 °C bis 90 °C und der Erwärmungszeitraum im Bereich von 45 h bis 60 h;
vorzugsweise liegt die Wellenlänge des ultravioletten Lichts im Bereich von 250 nm bis 380 nm;
vorzugsweise umfasst der Vernetzungsprozess: das Auflösen des Polymernetzwerk-Vorläufers in einem zweiten organischen Lösungsmittel, gefolgt von der Zugabe einer Butylacetat-Lösung des Vernetzungsmittels und des Vernetzungskatalysators, um ein flüssiges Gemisch zu erhalten; das Erhitzen und Trocknen des flüssigen Gemischs, gefolgt von der Bestrahlung mit ultraviolettem Licht, um das Polycaprolactonformgedächtnismaterial zu erhalten;
vorzugsweise ist das zweite organische Lösungsmittel mindestens eines ausgewählt aus der Gruppe bestehend aus Tetrahydrofuran, N,N-Dimethylformamid, Dichlormethan und Dioxan; der Vernetzungskatalysator ist mindestens einer ausgewählt aus der Gruppe bestehend aus Dibutylzinndilaurat, einem organischen Wismutkatalysator und N,N-Dimethylcyclohexylamin;
vorzugsweise wird das zweite organische Lösungsmittel in einer solchen Menge eingesetzt, dass die Konzentration des flüssigen Gemisches im Bereich von 1 g/ml bis 10 g/ml, vorzugsweise im Bereich von 2 g/ml bis 8 g/ml, liegt; die eingesetzte Menge des Vernetzungskatalysators beträgt 1 Gew.-% bis 5 Gew.-%, vorzugsweise 2 Gew.-% bis 4 Gew.-%, bezogen auf den Polymernetzwerk-Vorläufer.

**13.** Verfahren nach einem der Ansprüche 9-12, wobei das Polyrotaxan nach dem folgenden Verfahren hergestellt wird: Umsetzen von $\alpha$-Cyclodextrin mit Polyethylenglykoldiamin in Gegenwart einer Verbindung mit großer sterischer Hinderung;

vorzugsweise ist die Verbindung mit großer sterischer Hinderung mindestens eine ausgewählt aus der Gruppe bestehend aus N-Benzyloxycarbonyl-L-Tyrosin, 1-Adamantanessigsäure, Fluoresceinisothiocyanat und L-Phenylalanin;
vorzugsweise weist das Polyethylenglykoldiamin ein mittleres Molekulargewicht von 5 kDa bis 40 kDa, vorzugsweise von 10 kDa bis 35 kDa, auf, wobei das mittlere Molekulargewicht mittels Gelpermeationschromatographie, wie in der Beschreibung angegeben, gemessen wird;
vorzugsweise beträgt das Molverhältnis von $\alpha$-Cyclodextrin zu Polyethylenglykoldiamin (50-100):1, mehr bevorzugt (80-90):1;
vorzugsweise beträgt das Molverhältnis der Verbindung mit großer sterischer Hinderung zu dem Polyethylenglykoldiamin (2-10):1, mehr bevorzugt (5-8):1; vorzugsweise umfasst das Reaktionsverfahren die folgenden Schritte:

(i) Zugabe des Polyethylenglykoldiamins in eine gesättigte wässrige Lösung von $\alpha$-Cyclodextrin, Rühren bei einer Temperatur von 20 °C bis 35 °C über einen Zeitraum von 20 h bis 40 h und Trocknen des erhaltenen weißen Niederschlags, um eine Clathratverbindung zu erhalten;
(ii) Auflösen der Verbindung mit großer sterischer Hinderung, des Amidierungskatalysators und des

Wasserabsorptionsmittels II in einem dritten organischen Lösungsmittel zur Herstellung einer Lösung, anschließendes Einbringen der Clathratverbindung in die Lösung, Durchführen einer Amidierungsreaktion an der erhaltenen Suspension und anschließendes Ausfällen sowie Waschen und Trocknen des erhaltenen Festphasen-Niederschlags zur Herstellung des Polyrotaxans;

vorzugsweise ist der Amidierungskatalysator mindestens einer ausgewählt aus der Gruppe bestehend aus Carter-Kondensationsreagenz, Zinkchlorid und Eisen(III)-chlorid-Hexahydrat; das Wasserabsorptionsmittel II ist mindestens eines ausgewählt aus der Gruppe bestehend aus N,N-Diisopropylethylamin, 1-Hydroxybenzotriazol und Dicyclohexylcarbodiimid;
das dritte organische Lösungsmittel ist mindestens eines ausgewählt aus der Gruppe bestehend aus N,N-Dimethylformamid, Tetrahydrofuran und Dichlormethan;
vorzugsweise beträgt die eingesetzte Menge des Amidierungskatalysators 1 Gew.-% bis 5 Gew.-%, vorzugsweise 2 Gew.-% bis 4 Gew.-%, bezogen auf die Gesamtmenge des Polyethylenglykoldiamins und $\alpha$-Cyclodextrins; die eingesetzte Menge des Wasserabsorptionsmittels II beträgt 1 Gew.-% bis 5 Gew.-%, vorzugsweise 2 Gew.-% bis 4 Gew.-%, bezogen auf die Gesamtmenge des Polyethylenglykoldiamins und $\alpha$-Cyclodextrins; das dritte organische Lösungsmittel wird in einer solchen Menge eingesetzt, dass die Konzentration der Lösung im Bereich von 1 g/ml bis 10 g/ml, mehr bevorzugt im Bereich von 2 g/ml bis 8 g/ml liegt; vorzugsweise weist das Polyrotaxan ein mittleres Molekulargewicht im Bereich von 10 kDa bis 100 kDa, mehr bevorzugt im Bereich von 30 kDa bis 90 kDa auf, wobei das mittlere Molekulargewicht mittels Gelpermeationschromatographie, wie in der Beschreibung angegeben, gemessen wird.

**14.** Verwendung des Polycaprolactonformgedächtnismaterials nach einem der Ansprüche 1-5 in einem medizinischen, wiedergewinnbaren Fixierungsmaterial, wobei die Verwendung vorzugsweise eine medizinische Fixierungsklemme mit Formgedächtnis umfasst.

## Revendications

**1.** Matériau à mémoire de forme à base de polycaprolactone comprenant une pluralité de chaînes macromoléculaires de polyrotaxane modifié, et une pluralité de chaînes macromoléculaires composites reliées à différentes chaînes macromoléculaires de polyrotaxane modifié, dans lequel chacune des chaînes macromoléculaires composites comprend au moins deux segments de chaînes macromoléculaires de polycaprolactone, un groupe de liaison réversible entre différentes chaînes macromoléculaires de polycaprolactone, et un groupe de modification de liaison pour lier des structures cycliques dérivées de la cyclodextrine comprises dans les chaînes macromoléculaires de polycaprolactone et les chaînes macromoléculaires de polyrotaxane modifiées, dans lequel le groupe de liaison réversible est un groupe de liaison photoréversible.

**2.** Matériau à mémoire de forme à base de polycaprolactone selon la revendication 1, dans lequel le groupe de liaison photoréversible est dérivé d'un composé comportant un groupe photoréversible, de préférence le composé étant choisi parmi les composés de nitrocinnamate et/ou l'acide 4-((4-méthyl-2-oxo-2H-chromène-7-yl)oxy)butyrique.

**3.** Matériau à mémoire de forme à base de polycaprolactone selon les revendications 1 ou 2, dans lequel le groupe de modification de liaison est dérivé d'un composé pour l'hydroxypropylation, de préférence un groupe représenté par la formule structurelle $-CH_2-CH(CH_3)-O-$.

**4.** Matériau à mémoire de forme à base de polycaprolactone selon l'une quelconque des revendications 1 à 3, dans lequel la quantité totale des chaînes moléculaires de polycaprolactone est de 80 % à 100 % en poids, de préférence de 95 % à 99,9 % en poids, sur la base de la quantité totale des chaînes macromoléculaires de polyrotaxane modifié ;

de préférence, les chaînes macromoléculaires de polycaprolactone présentent un poids moléculaire moyen en poids se situant dans la plage de 5 000 kDa à 100 000 kDa, de préférence dans la plage de 10 000 kDa à 80 000 kDa, le poids moléculaire moyen en poids étant mesuré par chromatographie par perméation de gel, comme indiqué dans la description ;
de préférence, les chaînes macromoléculaires de polyrotaxane modifié présentent un poids moléculaire moyen en poids de 10 kDa à 100 kDa, de préférence de 30 kDa à 90 kDa, le poids moléculaire moyen en poids étant mesuré par chromatographie par perméation de gel, comme indiqué dans la description.

**5.** Matériau à mémoire de forme à base de polycaprolactone selon l'une quelconque des revendications 1 à 4, dans

lequel le matériau à mémoire de forme à base de polycaprolactone présente un allongement à la rupture supérieur à 900 %, le matériau à mémoire de forme à base de polycaprolactone a une teneur en gel située dans une plage de 37 % à 78 % en poids, et le temps nécessaire au matériau à mémoire de forme à base de polycaprolactone pour récupérer sa forme d'origine après une déformation à 100 % n'est pas supérieur à 5 s, dans lequel l'allongement à la rupture est mesuré par des essais de propriétés mécaniques, la teneur en gel est mesurée par un procédé d'extraction de Soxhlet, la vitesse de récupération de forme et le taux de récupération de forme sont mesurés par un procédé de chauffage et d'étirement sur plaque.

**6.** Composition pour la préparation du matériau à mémoire de forme à base de polycaprolactone selon l'une quelconque des revendications 1 à 5, comprenant un initiateur de polyrotaxane, un modificateur de groupe terminal, de l'ε-caprolactone, un catalyseur et un agent de réticulation ; dans laquelle le modificateur de groupe terminal est choisi parmi des composés de nitrocinnamate et/ou de l'acide 4-((4-méthyl-2-oxo-2H-chromène-7-yl)oxy)butyrique.

**7.** Composition selon la revendication 6, dans laquelle l'initiateur de polyrotaxane présente un poids moléculaire moyen en poids de 10 kDa à 100 kDa, de préférence de 30 kDa à 90 kDa, le poids moléculaire moyen en poids étant mesuré par chromatographie par perméation de gel, comme indiqué dans la description ;

de préférence, le catalyseur est au moins l'un choisi parmi le groupe comprenant l'octoate stanneux, le diisopropylamide de lithium, le trifluorométhanesulfonate de scandium et la base de phosphazène ;
de préférence, l'agent de réticulation est choisi parmi les diisocyanates, de préférence au moins l'un choisi dans le groupe constitué par le diisocyanate d'hexaméthylène, le diisocyanate de toluène, le diisocyanate d'isophorone et le diisocyanate de lysine.

**8.** Composition selon la revendication 6 ou 7, dans laquelle la composition comprend l'initiateur de polyrotaxane dans une plage allant de 0,01 % à 0,1 % en poids, de l'ε-caprolactone dans une plage allant de 99 % à 99,99 % en poids, le catalyseur dans une plage allant de 0,5 % à 2 % en poids, le modificateur de groupe terminal dans une plage allant de 0,02 % à 0,05 % en poids, et l'agent de réticulation dans une plage allant de 0,1 % à 1 % en poids, par rapport au poids total de la composition.

**9.** Procédé de préparation d'un matériau à mémoire de forme à base de polycaprolactone, comprenant les étapes suivantes :

(1) soumission du polyrotaxane à une hydroxypropylation afin d'obtenir du polyrotaxane hydroxypropylé ;
(2) réalisation d'une polymérisation par ouverture de cycle sur le polyrotaxane hydroxypropylé et l'ε-caprolactone en présence d'un catalyseur, afin d'obtenir un copolymère de polyrotaxane greffé par polycaprolactone ;
(3) soumission du copolymère de polyrotaxane greffé par polycaprolactone et de groupes photoréversibles d'un modificateur de groupe terminal à une réaction de modification afin d'obtenir un précurseur de réseau polymère, la partie de groupe terminal du précurseur de réseau polymère étant modifiée en groupe photoréversible ;
(4) favorisation de la réaction du groupe photoréversible afin de réticuler le précurseur de réseau polymère en présence d'un agent de réticulation et sous l'action de la chaleur et de la lumière ultraviolette, pour préparer le matériau à mémoire de forme à base de polycaprolactone.

**10.** Procédé selon la revendication 9, dans lequel le catalyseur à l'étape (2) est au moins l'un choisi parmi le groupe comprenant l'octoate stanneux, le diisopropylamide de lithium, le trifluorométhanesulfonate de scandium et la base de phosphazène ;

de préférence, la quantité de catalyseur utilisée est de 0,5 % à 2 % en poids, et de préférence encore de 0,8 % à 1,2 % en poids, sur la base de la masse totale du polyrotaxane hydroxypropylé et de l'ε-caprolactone ;
de préférence, le rapport molaire entre le polyrotaxane hydroxypropylé, en termes de nombre de groupes hydroxyles actifs qu'il contient, et l'ε-caprolactone est de 1: (50 à 600), plus préférablement de 1: (50 à 200) ;
de préférence, la température de polymérisation par ouverture de cycle se situe dans la plage de 100 °C à 140 °C, de préférence dans la plage de 110 °C à 130 °C, et la durée de la polymérisation par ouverture de cycle se situe dans la plage de 40 h à 50 h, plus préférablement de 45 h à 50 h ;
de préférence, le procédé de polymérisation par ouverture de cycle comprend : la soumission du mélange de polyrotaxane hydroxypropylé, d'ε-caprolactone et du catalyseur à une réaction de polymérisation sous protection d'azote gazeux ; la dissolution du produit primaire obtenu dans du tétrahydrofurane, puis la réalisation d'une précipitation dans du n-hexane, à de nombreuses reprises, suivie du séchage du précipité en phase solide obtenu pour préparer le copolymère de polyrotaxane greffé par polycaprolactone.

**11.** Procédé selon la revendication 9 ou 10, dans lequel le rapport molaire entre le modificateur de groupe terminal et le copolymère de polyrotaxane greffé par polycaprolactone à l'étape (3) est de (100 à 400): 1 ; de préférence, le modificateur de groupe terminal est choisi parmi des composés comportant un groupe photoréversible, de préférence choisi parmi des composés de nitrocinnamate et/ou de l'acide 4-((4-méthyl-2-oxo-2H-chromène-7-yl)oxy)butyrique ;

de préférence, la température de la réaction de modification de groupe terminal se situe dans une plage de 40 °C à 60 °C, et la durée de la réaction de modification de groupe terminal se situe dans la plage de 15 à 25 heures ;
de préférence, le procédé de réaction de modification de groupe terminal comprend : le mélange du modificateur de groupe terminal et du copolymère de polyrotaxane greffé par polycaprolactone respectivement avec une solution préparée avec un premier solvant organique, l'ajout d'un absorbant d'eau I et d'un catalyseur d'estérification dans la solution mixte obtenue, puis la réalisation de la réaction de modification de groupe terminal ; la soumission du produit initial obtenu à une précipitation, à de nombreuses reprises, et le séchage du précipité solide obtenu pour obtenir le précurseur de réseau polymère ; de préférence, le premier solvant organique est au moins un élément choisi parmi le groupe constitué du tétrahydrofurane, du N,N-diméthylformamide, du dichlorométhane et du dioxane ; l'absorbant d'eau I est au moins l'un choisi parmi le N,N-diisopropylcarbodiimide, le dicyclohexylcarbodiimide et l'acide sulfurique concentré ; le catalyseur d'estérification est au moins un élément choisi parmi le groupe constitué de la 4-diméthylaminopyridine, de l'acide p-toluènesulfonique et du chlorure de thionyle ;
de préférence, le premier solvant organique est utilisé en une quantité telle que la concentration de la solution mélangée se situe dans la plage de 1 g/mL à 10 g/mL, de préférence dans la plage de 2 g/mL à 8 g/mL ; la quantité utilisée d'absorbant d'eau I est de 1 % en poids à 5 % en poids, de préférence de 1,5 % en poids à 4,5 % en poids, par rapport à la quantité totale du modificateur de groupe terminal et du copolymère de polyrotaxane greffé par polycaprolactone ; le rapport molaire du catalyseur d'estérification au copolymère de polyrotaxane greffé par polycaprolactone est de 1: (1,5 à 3,5), de préférence de 1: (2 à 3) ;
de préférence, le précurseur de réseau polymère comporte une pluralité de chaînes moléculaires de polycaprolactone pouvant coulisser, et une partie des extrémités des chaînes moléculaires de polycaprolactone contiennent un groupe photoréversible dérivé du modificateur de groupe terminal, de préférence, le groupe photoréversible est un groupe coumarine ou un groupe cinnamate.

**12.** Procédé selon l'une quelconque des revendications 9 à 11, dans lequel l'agent de réticulation de l'étape (4) est choisi parmi les diisocyanates, de préférence au moins l'un choisi dans le groupe constitué par le diisocyanate d'hexaméthylène, le diisocyanate de toluène, le diisocyanate d'isophorone et le diisocyanate de lysine ;

de préférence, la quantité d'agent de réticulation utilisée est de 0,1 % à 1 % en poids du précurseur du réseau polymère ;
de préférence, la température de chauffage se situe dans la plage de 70 °C à 90 °C, et la durée de chauffage se situe dans la plage de 45 h à 60 h ;
de préférence, la longueur d'onde de la lumière ultraviolette se situe dans la plage de 250 nm à 380 nm ;
de préférence, le procédé de réticulation comprend : la dissolution du précurseur de réseau polymère dans un deuxième solvant organique, puis l'ajout d'une solution d'acétate de butyle de l'agent de réticulation et du catalyseur de réticulation afin d'obtenir un mélange liquide ; le chauffage et le séchage du mélange liquide, puis l'irradiation sous lumière ultraviolette afin d'obtenir le matériau à mémoire de forme à base de polycaprolactone ;
de préférence, le deuxième solvant organique est au moins l'un choisi parmi le groupe comprenant le tétrahydrofurane, le N,N-diméthylformamide, le dichlorométhane et le dioxane ; le catalyseur de réticulation est au moins l'un choisi parmi le groupe constitué du dilaurate de dibutylétain, d'un catalyseur de bismuth organique et de la N,N-diméthylcyclohexylamine ;
de préférence, le deuxième solvant organique est utilisé en une quantité telle que la concentration du mélange liquide se situe dans la plage de 1 g/mL à 10 g/mL, de préférence dans la plage de 2 g/mL à 8 g/mL ; la quantité utilisée du catalyseur de réticulation est de 1 % en poids à 5 % en poids, de préférence de 2 % en poids à 4 % en poids, du précurseur de réseau polymère.

**13.** Procédé selon l'une quelconque des revendications 9 à 12, dans lequel le polyrotaxane est préparé selon le procédé suivant : la réaction d'$\alpha$-cyclodextrine avec de la polyéthylèneglycol-diamine en présence d'un composé présentant un important encombrement stérique ;

de préférence, le composé présentant un important encombrement stérique est au moins l'un choisi parmi le groupe constitué de la N-benzyloxycarbonyl-L-tyrosine, de l'acide 1-adamantane-acétique, de l'isothiocyanate de fluorescéine et de la L-phénylalanine ;

de préférence, la polyéthylène glycol diamine présente un poids moléculaire moyen en poids de 5 kDa à 40 kDa, de préférence de 10 kDa à 35 kDa, le poids moléculaire moyen en poids étant mesuré par chromatographie par perméation de gel, comme indiqué dans la description ;
de préférence, le rapport molaire entre l'$\alpha$-cyclodextrine et la polyéthylène glycol diamine est de (50 à 100): 1, et plus préférablement de (80 à 90): 1 ;
de préférence, le rapport molaire entre le composé à important encombrement stérique et la polyéthylène glycol diamine est de (2 à 10): 1, et plus préférablement de (5 à 8): 1 ;
de préférence, le procédé de réaction comprend les étapes suivantes :

(i) ajout de la polyéthylène glycol diamine dans une solution aqueuse saturée d'$\alpha$-cyclodextrine, agitation à une température comprise entre 20 °C et 35 °C pendant une durée de 20 h à 40 h, puis séchage du précipité blanc obtenu pour obtenir un composé clathrate ;
(ii) dissolution du composé à important encombrement stérique, du catalyseur d'amidation et de l'absorbant d'eau II dans un troisième solvant organique pour préparer une solution, puis ajout du composé clathrate dans la solution, soumission de la suspension obtenue à une réaction d'amidation, puis réalisation d'une précipitation, et lavage et séchage du précipité en phase solide obtenu pour préparer le polyrotaxane ;

de préférence, le catalyseur d'amidation est au moins l'un choisi parmi le groupe constitué d'un réactif de condensation de Carter, de chlorure de zinc et d'hexahydrate de chlorure ferrique ; l'absorbant d'eau II est au moins l'un choisi dans le groupe constitué par la N,N-diisopropyléthylamine, le 1-hydroxybenzotriazole et le dicyclohexylcarbodiimide ; le troisième solvant organique est au moins l'un choisi parmi le groupe constitué du N,N-diméthylformamide, du tétrahydrofurane et du dichlorométhane ;
de préférence, la quantité utilisée du catalyseur d'amidation est de 1 % à 5 % en poids, de préférence de 2 % à 4 % en poids, de la quantité totale de polyéthylène glycol diamine et d'$\alpha$-cyclodextrine ; la quantité utilisée de l'agent absorbant l'eau II est de 1 % à 5 % en poids, de préférence de 2 % à 4 % en poids, de la quantité totale de polyéthylène glycol diamine et d'alpha-cyclodextrine ; le troisième solvant organique est utilisé en une quantité telle que la concentration de la solution se situe dans la plage de 1 g/mL à 10 g/mL, de préférence dans la plage de 2 g/mL à 8 g/mL ;
de préférence, le polyrotaxane présente un poids moléculaire moyen se situant dans la plage de 10 kDa à 100 kDa, et plus préférablement de 30 kDa à 90 kDa, le poids moléculaire moyen en poids étant mesuré par chromatographie par perméation de gel, comme indiqué dans la description.

**14.** Utilisation du matériau à mémoire de forme à base de polycaprolactone selon l'une quelconque des revendications 1 à 5 dans un matériau médical de fixation récupérable, de préférence l'utilisation comprend une pince de fixation médicale à mémoire de forme.

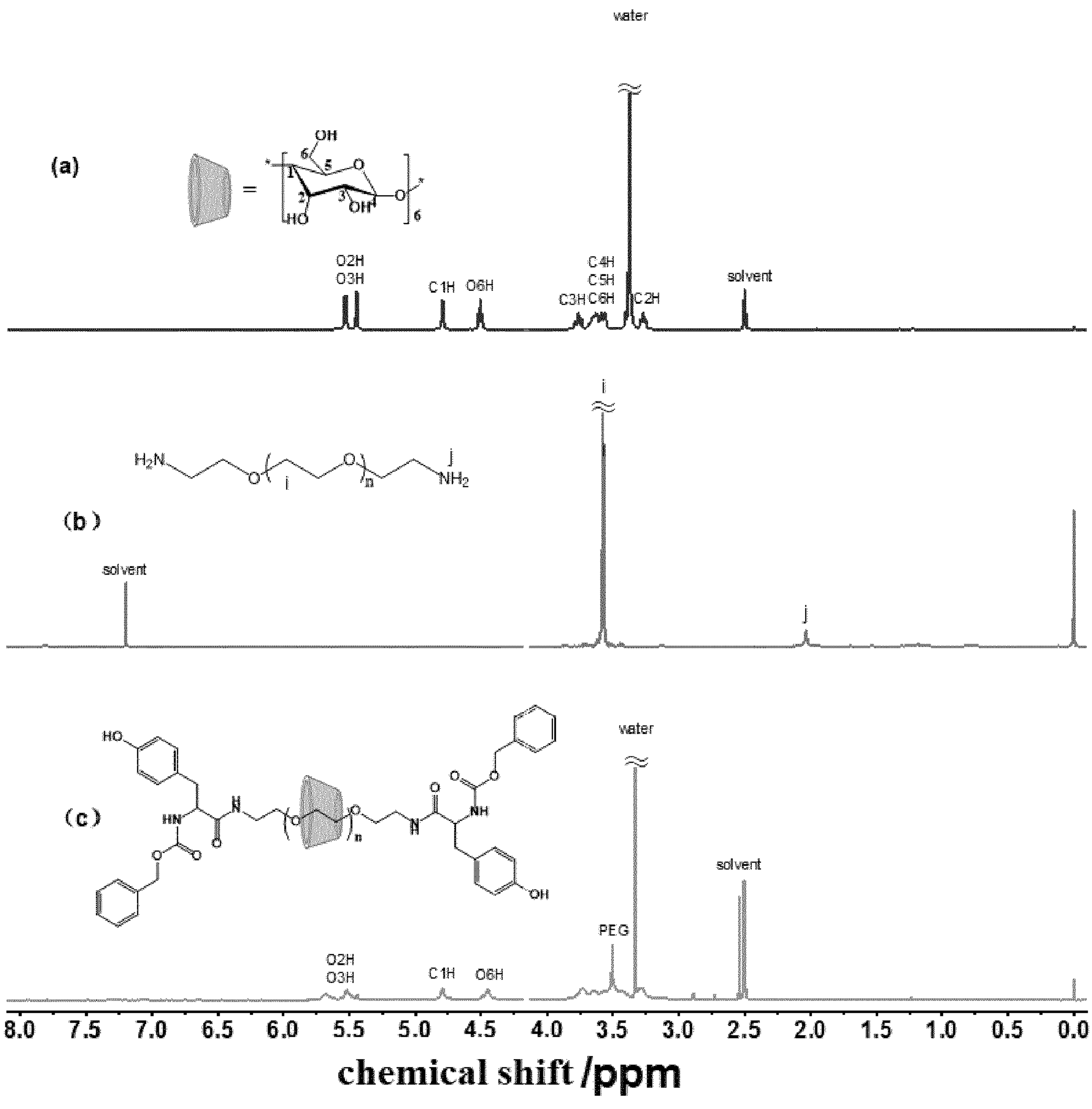
water
(a)
O2H
O3H
C1H
O6H
C4H
C5H
C6H
C3H
C2H
solvent
i
j
(b)
solvent
water
(c)
solvent
PEG
O2H
O3H
C1H
O6H
8.0 7.5 7.0 6.5 6.0 5.5 5.0 4.5 4.0 3.5 3.0 2.5 2.0 1.5 1.0 0.5 0.0
chemical shift /ppm

FIG. 1

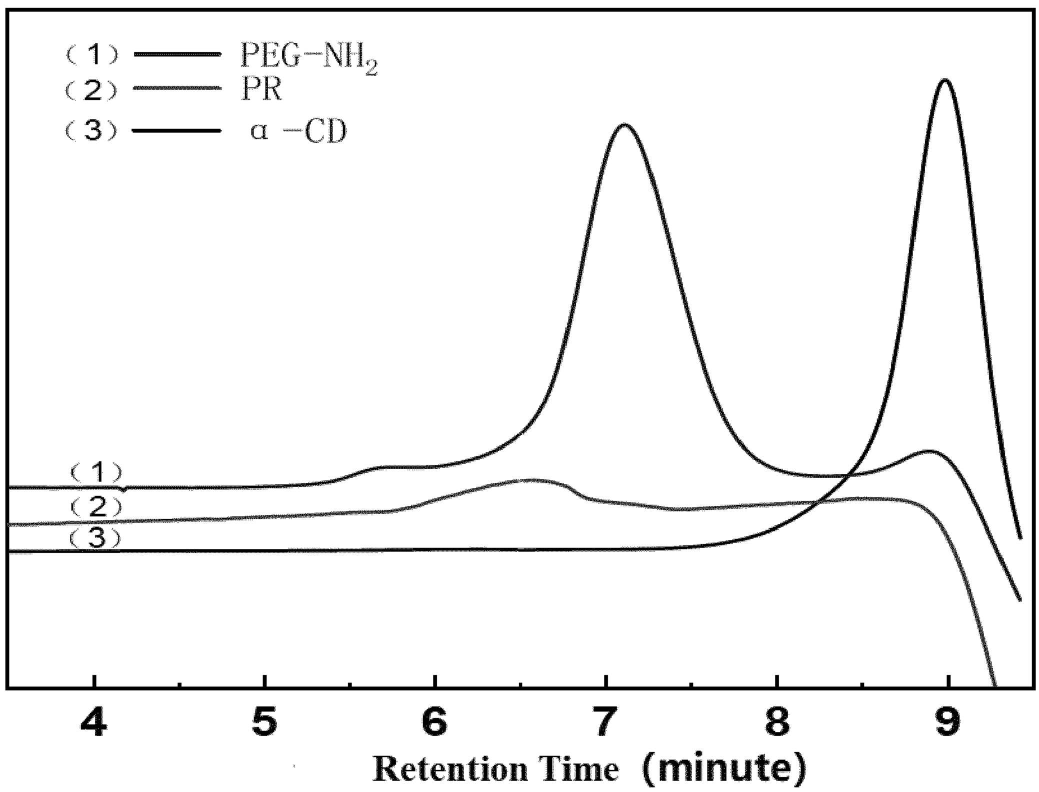
(1) PEG-$NH_2$
(2) PR
(3) α-CD
(1)
(2)
(3)
4
5
6
7
8
9
Retention Time (minute)

FIG. 2

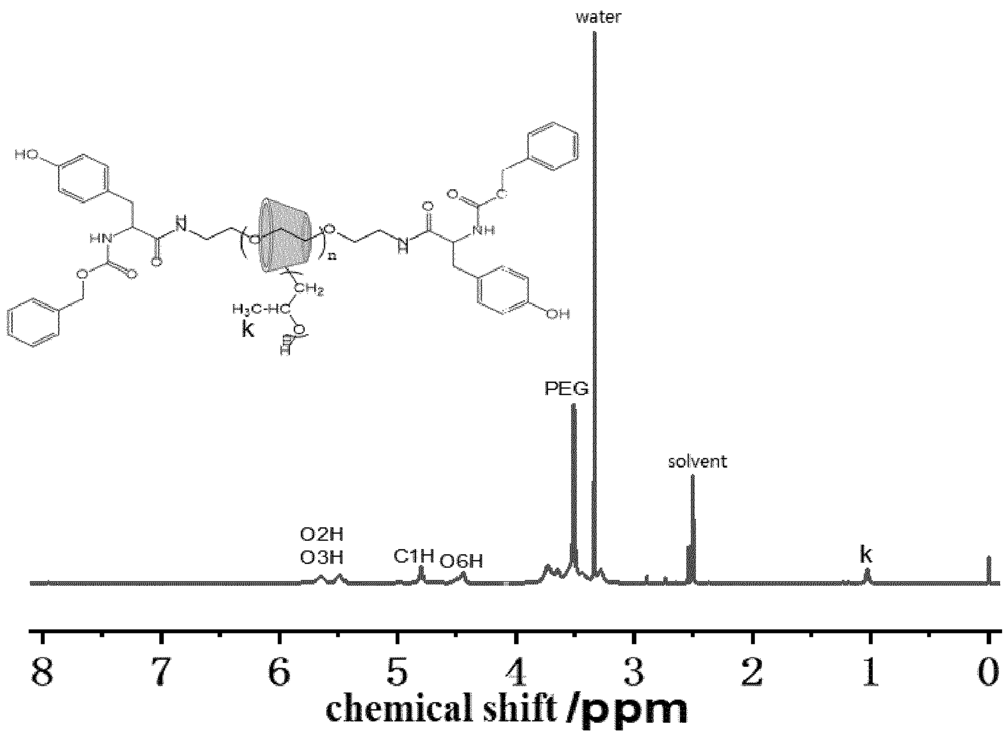
water
PEG
solvent
O2H
O3H
C1H
O6H
k
8
7
6
5
4
3
2
1
0
chemical shift /ppm

FIG. 3

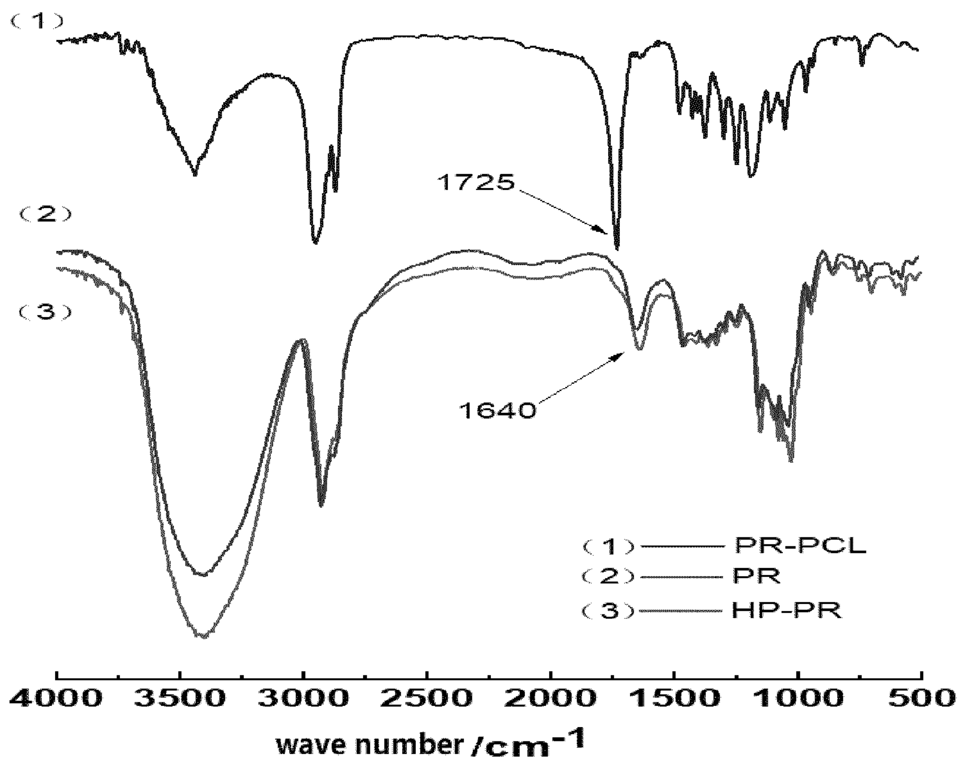
(1)
1725
(2)
(3)
1640
(1) PR-PCL
(2) PR
(3) HP-PR
4000 3500 3000 2500 2000 1500 1000 500
wave number /cm$^{-1}$

FIG. 4

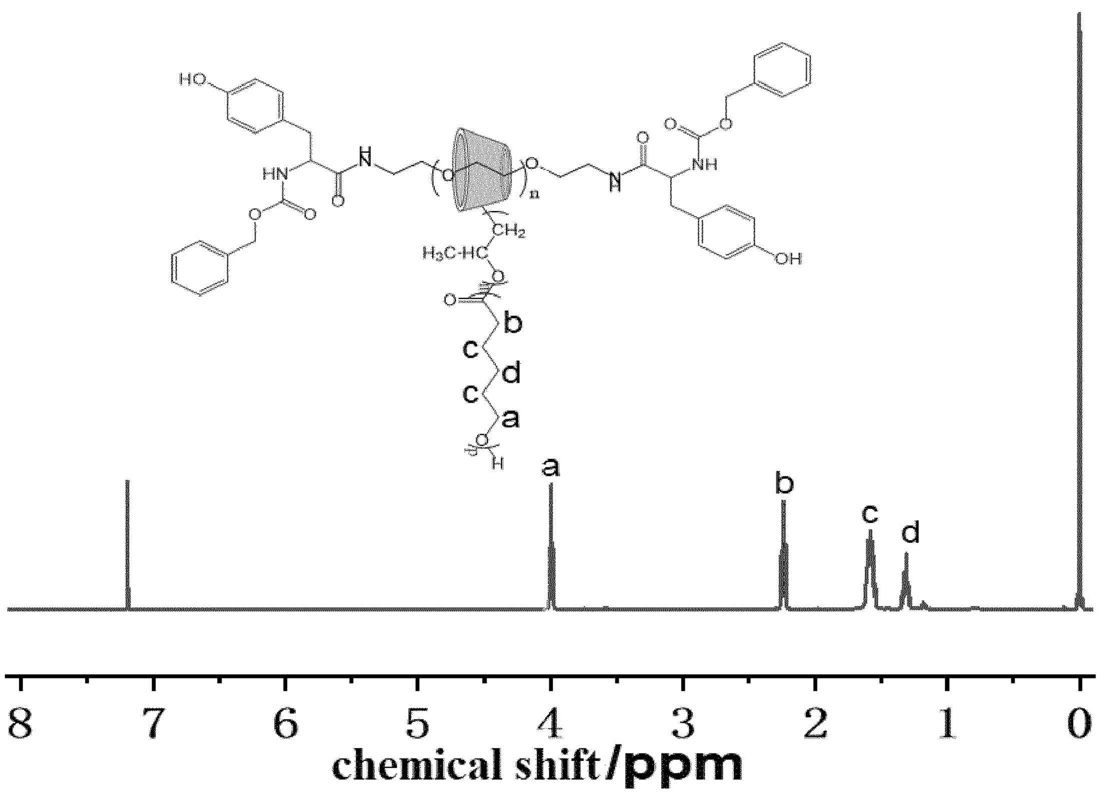
a
b
c
d
8 7 6 5 4 3 2 1 0
chemical shift/ppm

FIG. 5

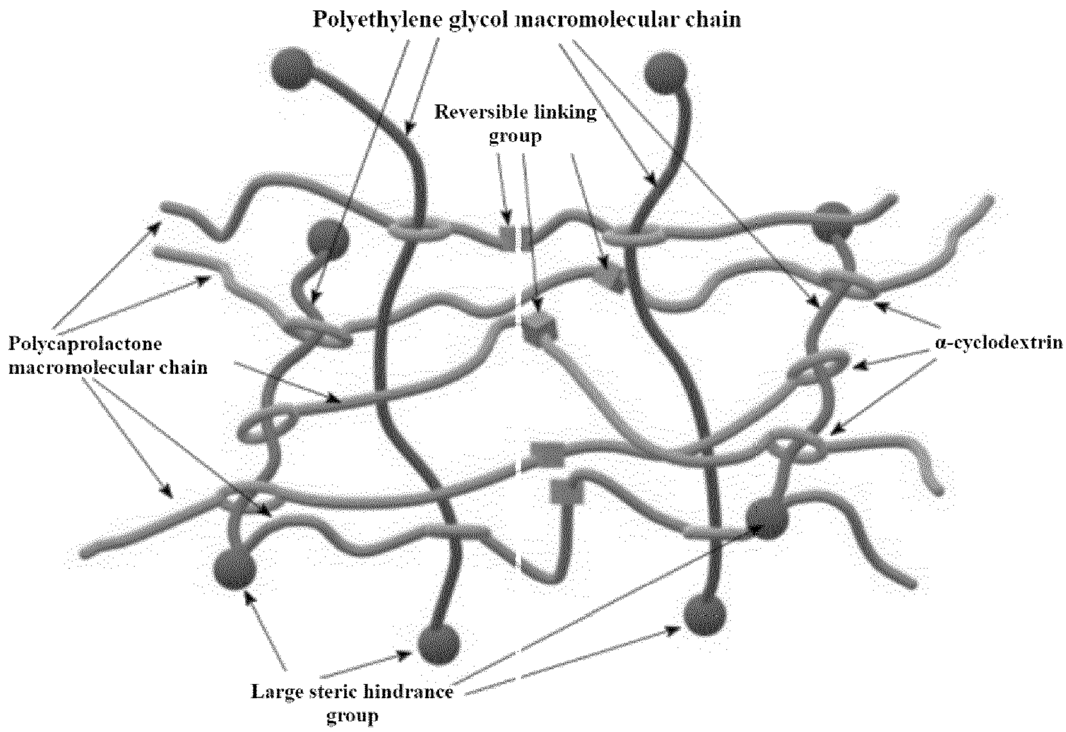
Polyethylene glycol macromolecular chain
Reversible linking group
Polycaprolactone macromolecular chain
α-cyclodextrin
Large steric hindrance group

FIG. 6

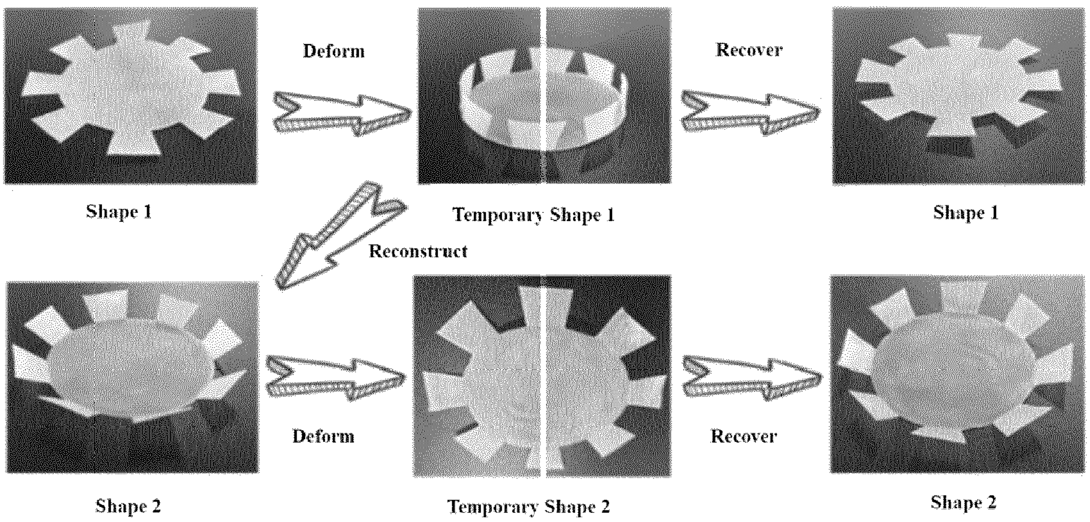
Deform
Recover
Shape 1
Temporary Shape 1
Shape 1
Reconstruct
Shape 2
Deform
Temporary Shape 2
Recover
Shape 2

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202111266177


### Non-patent literature cited in the description


- **SOFT MATTER**. *High-strain slide-ring shape-memory polycaprolactone-based polyurethane*, 01 January 2018, vol. 14, 4558-4568
- High-strain slide-ring shape-memory polycaprolactone-based polyurethane. *Polymer*, vol. 128, 386-391